(19) Europäisches Patentamt
European Patent Office
Office européen des brevets

(11) EP 1 767 504 B1

(12) **EUROPEAN PATENT SPECIFICATION**

(45) Date of publication and mention of the grant of the patent:
**18.09.2013 Bulletin 2013/38**

(21) Application number: **05766531.7**

(22) Date of filing: **13.07.2005**

(51) Int Cl.:
***C04B 24/26*** *(2006.01)* ***C04B 28/02*** *(2006.01)*
***C08F 220/28*** *(2006.01)* ***C08F 230/02*** *(2006.01)*
***C08F 290/06*** *(2006.01)* ***C04B 103/40*** *(2006.01)*

(86) International application number:
**PCT/JP2005/013342**

(87) International publication number:
**WO 2006/006732 (19.01.2006 Gazette 2006/03)**

(54) **PHOSPHORIC ESTER POLYMER**

PHOSPHORSÄUREESTERPOLYMER

POLYMÈRES D'ESTERS PHOSPHORIQUES

(84) Designated Contracting States:
**DE ES FR IT NL SE**

(30) Priority: **15.07.2004 JP 2004209044**

(43) Date of publication of application:
**28.03.2007 Bulletin 2007/13**

(73) Proprietor: **KAO CORPORATION**
**Tokyo 103-8210 (JP)**

(72) Inventors:
- **HAMADA, Daisuke c/o Kao corporation, Research Lab.**
  **Wakayama-shi, Wakayama (JP)**
- **HAMAI, Toshimasa c/o Kao Corp., Research Lab.**
  **Wakayama-shi, Wakayama (JP)**
- **SHIMODA, Masaaki c/o Kao Corp., Research Lab.**
  **Wakayama-shi, Wakayama (JP)**
- **KONO, Yoshinao c/o Kao Corp., Research Lab.**
  **Wakayama-shi, Wakayama (JP)**
- **TANISHO, Yoshiaki c/o Kao Corp., Research Lab.**
  **Wakayama-shi, Wakayama (JP)**
- **MORII, Yoshikazu c/o Kao Corp., Research Lab.**
  **Wakayama-shi, Wakayama (JP)**
- **NAKA, Yoshihito c/o Kao Corp., Research Lab.**
  **Wakayama-shi, Wakayama (JP)**

(74) Representative: **HOFFMANN EITLE**
**Patent- und Rechtsanwälte**
**Arabellastrasse 4**
**81925 München (DE)**

(56) References cited:
**EP-A1- 1 300 426** **WO-A2-01/74909**
**JP-A- 2000 327 386** **JP-A- 2000 327 386**
**JP-A- 2004 075 977** **US-A- 3 855 364**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 767 504 B1

## Description

Field of the invention

The present invention relates to a process for producing a phosphate polymer The use a dispersant for a hydraulic composition comprising the same, and a hydraulic composition comprising the same.

Background of the invention

Among admixtures for hydraulic compositions, there are those called a high-performance water-reducing agent having a high effect of conferring fluidity. Typical examples include a naphthalene sulfonic acid/formaldehyde condensate salt (naphthalene-based water-reducing agent), a melamine sulfonic acid/formaldehyde condensate salt (melamine-based water-reducing agent) or a water-reducing agent based on a polycarboxylic acid having a polyoxyalkylene chain.

In recent years, there is an increasing trend toward higher durability of concrete as a typical hydraulic composition, and for example, concrete is endowed with high strength by reduction of the amount of water used therein, and this trend is estimated to increase in the future as well. The reduction of the amount of water is effected mainly by using a polycarboxylic acid-based water-reducing agent excellent in water-reducing properties and fluidity-retaining properties. As the amount of water is reduced, however, the viscosity of fresh concrete (referred to hereinafter as concrete viscosity) is increased, and thus there is a problem of deterioration in workability and operativeness in pumping, placing, and filling in a concrete frame. This problem of an increase in viscosity is not completely solved even by the polycarboxylic acid-based water-reducing agent, and there is a need for an additive having a higher effect of reducing concrete viscosity.

Under these circumstances, JP-A 11-79811 discloses a concrete admixture comprising, as an essential ingredient, a vinyl copolymer containing a long-chain oxyalkylene group and a specific monomer. JP-A 2000-327386 proposes use of a product obtained by polymerizing a monoester or monoether having a polyalkylene glycol chain with a monomer having a unsaturated bond and a phosphoric acid group, in order to obtain a dispersant for cement capable of exhibiting excellent fluidity, a high dispersing effect and rapid caking regardless of the compounding ratio of water.

EP 1300426 A1 describes a (meth)acrylic acid type polymer and unsaturated polyalkylene glycol type copolymer. The former polymer is a water-soluble polymer having a low molecular weight and a low content of impurities.

WO 01/74909 A2 reveals a polymerizable ester surfactant of a specific formula which is useful as the sole surfactant in producing polymer lattices by emulsion polymerization with another polymerizable monomer.

Summary of the invention

The present invention relates to a process for producing a phosphate polymer, which comprises copolymerization of a monomer 1 represented by the following formula (1) [referred to hereinafter as monomer 1], a monomer 2 represented by the following formula (2) [referred to hereinafter as monomer 2] and a monomer 3 represented by the following formula (3) [referred to hereinafter as monomer 3] at pH 7 or less and in the presence of a chain transfer agent,

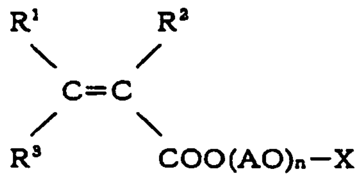

(1)

wherein $R^1$ and $R^2$ each represent a hydrogen atom or a methyl group, $R^3$ represents a hydrogen atom or $-COO(AO)_nX$ whereupon AO is a C2 to C4 oxyalkylene group or an oxystyrene group, n is a number of 3 to 200 which is the average number of total AO units added, and X represents a hydrogen atom or a C1 to C18 alkyl group,

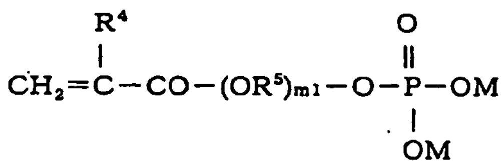

(2)

wherein $R^4$ represents a hydrogen atom or a methyl group, $R^5$ represents a C2 to C12 alkylene group, m1 is a number of 1 to 30, M represents a hydrogen atom, an alkali metal or an alkaline earth metal,

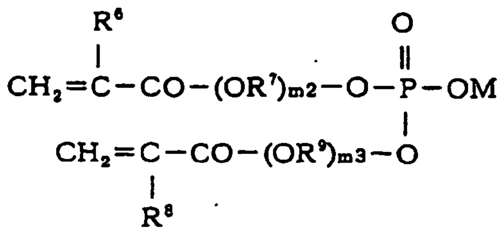 (3)

wherein $R^6$ and $R^8$ each represent a hydrogen atom or a methyl group, $R^7$ and $R^9$ each represent a C2 to C12 alkylene group, m2 and m3 each represent a number of 1 to 30, and M represents a hydrogen atom, an alkali metal or an alkaline earth metal.

The present invention also relates to a hydraulic composition, which comprises a hydraulic powder, water and the above-defined phosphate polymer.

Further, the present invention relates to the use of said phosphate polymer as a dispersant for a hydraulic composition.

Furthermore, the present invention relates to a phosphate copolymer (referred to hereinafter as second phosphate polymer) obtained by copolymerization of the following (X) and (Y) at (pH 7 or less, (X) the monomer 1 represented by the formula (1) , and (Y) a phosphate obtained by reacting an organic hydroxy compound represented by the following general formula (4) with a phosphorylating agent:

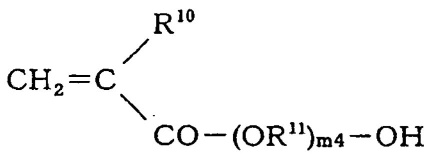 (4)

wherein $R^{10}$ represents a hydrogen atom or a methyl group, and $R^{11}$ represents a C2 to C12 alkylene group, and m4 is a number of 1 to 30.

Moreover, the present invention relates to a phosphate polymer (referred to hereinafter as third phosphate polymer) having a weight- average molecular weight of 10, 000 to 150, 000 and a weight- average molecular weight (referred to hereinafter as Mw) / number- average molecular weight (referred to hereinafter as Mn) ratio (Mw/Mn) of 1.0 to 2.6, which is obtained by copolymerization of the monomer 1 represented by the formula (1) , the monomer 2 represented by the formula (2) and the monomer 3 represented by the formula (3) .

Further, the present invention relates to a dispersant for a hydraulic composition, which comprises the phosphate polymer according to the present invention. Furthermore, the present invention relates to a hydraulic composition, which comprises a hydraulic powder, water, and the dispersant for a hydraulic composition according to the present invention.

The invention provides use of the above shown phosphate polymer as a dispersant for a hydraulic composition and a method of dispersing a hydraulic composition with the above shown phosphate polymer.

Detailed explanation of the invention

However, there is a limit to the reduction of viscosity by the polymer in JP- A 11- 79811 supra, and there is a need for further improvements in fluidity and reduction of viscosity by the polymer in JP- A 2000- 327386 supra.

The present invention relates a process wherein a phosphate polymer capable of endowing a hydraulic powder-containing hydraulic composition with an excellent dispersing effect and/or an excellent viscosity-reducing effect and usable as a dispersant for a hydraulic composition excellent in performance can be produced at an industrially practical level.

According to the present invention, there is provided a process for producing a phosphate polymer preferable as a dispersant for a hydraulic composition capable of suppressing a reduction in performance and polymerization due to crosslinking even if monomers containing a large amount of phosphoric diesters are used. Further, the characteristics of the phosphate polymer as a dispersant for a hydraulic composition are not deteriorated in the process of the present invention. A dispersant containing the phosphate polymer obtained by the process of the present invention can confer an excellent dispersing effect and viscosity-reducing effect on a hydraulic powder-containing hydraulic composition, and is excellent in performance.

The phosphate polymer of the present invention can exhibit fluidity and/or low viscosity equal to or higher than that of the conventional polycarboxylic acid-based water-reducing agent, even in a highly durable high-strength hydraulic composition containing a large amount of hydraulic powder of low water content. As a result, it can confer workability

and operativeness in excellent pumping, placing, and filling in a concrete frame.

«First phosphate polymer»

The first phosphate polymer of the present invention is a phosphate polymer obtained by copolymerization of the monomer 1 with a monomer mixture containing the monomers 2 and 3 at pH 7 or less. The structures of the monomers 1 to 3 are preferably the same as described later in the third phosphate polymer.

As the monomer mixture containing the monomers 2 and 3, a commercial product containing a monoester and a diester can be used and is available as, for example, Phosmer M, Phosmer PE, Phosmer P (Uni-Chemical Co., Ltd.), JAMP514, JAMP514P, JMP100 (manufactured by Johoku Chemical Co., Ltd.), Light Ester P-1M, Light Acrylate P-1A (Kyoeisha Chemical Co. , Ltd.), MR200 (Daihachi Chemical Industry Co., Ltd.), Kayamer (Nippon Kayaku Co., Ltd.), ethyleneglycol methacrylate phosphate (Aldrich) etc.

Alternatively, the monomer mixture containing the monomers 2 and 3 can be produced as a reaction product for example by reacting an organic hydroxy compound represented by the general formula (4) , phosphoric anhydride ($P_2O_5$) and water in a predetermined charging ratio.

The monomers 2 and 3 are phosphorylated products of monomers having an unsaturated bond and a hydroxyl group, and the commercial products described above and the reaction product have been confirmed to contain compounds other than the monoester (monomer 2) and the diester (monomer 3) . These other compounds are considered to contain polymerizable and non-polymerizable compounds in a mixed form, and in the present invention, such a mixture (monomer mixture) can be used as it is.

The content of the monomers 2 and 3 in the monomer mixture can be calculated according to $^{31}$P-NMR measurement results.

<$^{31}$P-NMR measurement conditions>

- Inverse-gated-decoupling method
- Measurement range 6459.9 Hz
- Pulse delay time 30 sec
- Observation data point 10336
- Pulse width (5.833 μsec) 35° pulse
- Solvent $CD_3OH$ (heavy methanol) (30 wt%)
- Integration frequency 128

Under these conditions, signals in an obtained chart are assigned to the following compounds, so from their area ratio, a relative ratio can be determined.

For example, when the organic hydroxy compound is a phosphorylated product "2-hydroxyethyl methacrylate", it can be assigned as follows:

- 1.8 ppm to 2.6 ppm: phosphoric acid
- 0.5 ppm to 1.1 ppm: monomer 2 (monoester)
- -0.5 ppm to 0.1 ppm: monomer 3 (diester)
- -1.0 ppm to 0.6 ppm: triester
- -11.1 ppm to -10.9 ppm, -12.4 ppm to -12.1 ppm: pyrophosphoric monoester
- -12.0 ppm to -11.8 ppm: pyrophosphoric diester
- -11.2 ppm to -11.1 ppm: pyrophosphoric acid
- other peaks: impurities

In the present invention, the content of phosphoric acid in the monomer mixture was quantified to determine the ratio of the monomers 2 and 3 in the monomer mixture. Specifically, the ratio is calculated in the following manner.

The absolute content (wt%) of phosphoric acid in the sample was determined by gas chromatography. Because the relative molar ratio of phosphoric acid, monoester and diester in the sample can be determined from P-NMR results, the absolute amounts of the monoester and diester were calculated on the basis of the absolute amount of phosphoric acid as standard.

[Phosphoric acid content]

Conditions in gas chromatography are as follows: Sample: Methylated with diazomethane.
Example) 0.1 g sample is methylated by adding 1 to 1.5 ml solution of diazomethane in diethyl ether.
Column: Ultra ALLOY, 15 m x 0.25 mm (inner diameter) x 0.15 μmdf
Carrier gas: He, split ratio 50 : 1
Column temperature: (kept at) 40°C (for 5 min) → (increasing temperature at) 10°C/min. to 300°C → kept at 300°C for 15 min.
Inlet temperature: 300°C
Detector temperature: 300°C
Under the conditions described above, a peak attributable to phosphoric acid is detected at about 9 minutes, and the unknown content of phosphoric acid in the sample can be calculated by a calibration curve method.

[Contents of monoester and diester]

Using the thus determined phosphoric acid content as standard, the total amount of the monoester and diester in a reagent used in the Examples etc. described later was calculated as follows. Considering that pyrophosphoric monoester, pyrophosphoric diester and pyrophosphoric acid are hydrolyzed in the polymerization process, the total amount was calculated by assigning the decomposed products to phosphoric acid and monoester.

- Ethyleneglycol methacrylate phosphate (Aldrich Reagent): 86.4 wt%
- Phosmer M: 81.8 wt%
- Light Ester P1M: 88.8 wt%

In the case of Example 1-1, the molar ratio of each monomer charged, when calculated for the monoester and diester from the above results and NMR results, is as follows.

- ω-Methoxy polyethyleneglycol monomethacrylate (number of ethylene oxide units added, 23; NK Ester M230G manufactured by Shin-Nakamura Chemical Co., Ltd.) = 33.6 mol%
- Phosphoric mono (2- hydroxyethyl) methacrylate = 44.7 mol%
- Phosphoric di- (2- hydroxyethyl) methacrylate = 21.7 mol%

As described above, the phosphate monomer is obtained industrially as a mixture usually containing the monoester (monomer 2) and the diester (monomer 3). Among these, the diester is easily polymerized (gelled) via crosslinkage, so for applications in fields utilizing this property, such as a thickener, an adhesive, a coating etc., such a mixture can be preferably used without undergoing significant limitation in the process. On the other hand, use thereof as an admixture (a dispersant, a water-reducing agent etc.) for a hydraulic composition is preferable because the phosphoric acid group-containing polymer is excellent in absorption of hydraulic substance, but as the molecular weight of the polymer is increased, the admixture reduces dispersibility and the viscosity reducing effect, and is thus not preferable in respect of handling. From the viewpoint of application to a hydraulic composition and economical properties, it is however industrially disadvantageous that the monoester and diester are separated from the phosphate mixture and used as the starting material.
Although use of a mixture of phosphates containing a larger amount of monoester is preferable from the viewpoint of fluidity and reduction in viscosity, a mixture containing a larger amount of diester can regulate fluidity and reduction in viscosity by regulating the copolymerization molar ratio of the monomer 1.

«Second phosphate polymer»

The present invention provides a phosphate copolymer (second phosphate polymer) obtained by copolymerizing the following (X) and (Y) at pH 7 or less. For a preferable structure of the monomer 1 and a preferable structure of the phosphate (Y), the description of the third phosphate polymer can be referred to.
(X) Monomer 1 represented by the general formula (1).
(Y) Phosphate obtained by reacting an organic hydroxy compound represented by the general formula (4) with a phosphorylating agent.
In the general formula (4), m4 is preferably 1 to 20, more preferably 1 to 10, still more preferably 1 to 5.
The phosphate (Y) is obtained by phosphorylating the organic hydroxy compound of the formula (4) with a phosphorylating agent.
The phosphorylating agent includes ortho-phosphoric acid, phosphorus pentaoxide (phosphoric anhydride),

polyphosphoric acid, phosphorus oxychloride etc., among which ortho-phosphoric acid and phosphorus pentaoxide are preferable. These can be used alone or as a mixture of two or more thereof. A phosphorylating agent (Z) described later is also preferable. In the present invention, the amount of the phosphorylating agent in reaction of the organic hydroxy compound with the phosphorylating agent can be determined suitably depending on the intended phosphate.

The phosphate (Y) is preferably the one obtained by reacting the organic hydroxy compound with the phosphorylating agent under conditions where the ratio defined in the following formula (I) is preferably 2.0 to 4.0, more preferably 2.5 to 3.5, still more preferably 2.8 to 3.2.

([Number of moles of water in the phosphorylating agent, including n ($H_2O$) in the phosphorylating agent when expressed as $P_2O_5 \cdot n\ (H_2O)$] + [number of moles of the organic hydroxy compound]) / (number of moles of the phosphorylating agent when converted into $P_2O_5$) (I)

In the present invention, the phosphorylating agent in formula (I) shall be dealt with as $P_2O_5 \cdot n\ (H_2O)$ for the sake of convenience.

In particular, the phosphorylating agent is preferably a phosphorylating agent [referred to hereinafter as phosphorylating agent (Z)] containing phosphorus pentaoxide (Z-1), water, and at least one member (Z-2) selected from the group consisting of phosphoric acid and polyphosphoric acid, and in this case too, in the formula (I), the phosphorylating agent (Z) containing phosphorus pentaoxide (Z-1), water, and at least one member (Z-2) selected from the group consisting of phosphoric acid and polyphosphoric acid shall also be dealt with as $P_2O_5 \cdot n\ (H_2O)$ for the sake of convenience.

The number of moles of the phosphorylating agent defined by the formula (I) refers to the amount of the phosphorylating agent introduced as a starting material into the reaction system, particularly to the amount (moles) of $P_2O_5$ units derived from the phosphorylating agent (Z) . The number of moles of water refers to the amount (moles) of water ($H_2O$) derived from the phosphorylating agent (Z) introduced as a starting material into the reaction system. That is, water includes every water including water present in the reaction system, that is, water in polyphosphoric acid when expressed as ($P_2O_5 \cdot xH_2O$) and in ortho- phosphoric acid when expressed as [1/2 ($P_2O_5 \cdot 3H_2O$) ] .

The temperature for adding the phosphorylating agent to the organic hydroxy compound is preferably 20 to 100°C, more preferably 40 to 90°C. The time required for adding the phosphorylating agent to the reaction system (that is, the time from the beginning to the end of the addition) is preferably 0.1 hour to 20 hours, more preferably 0.5 hour to 10 hours.

The temperature of the reaction system after adding the phosphorylating agent is preferably 20 to 100°C, more preferably 40 to 90°C. The copolymerization can be conducted on the basis of the process for producing the phosphate polymer as described later.

After the phosphorylation reaction is finished, the formed phosphoric acid condensate (pyrophosphoric acid bond-containing organic compound and phosphoric acid) may be reduced by hydrolysis, but even if hydrolysis is not conducted, the condensate is preferable as a monomer for production of the phosphate polymer according to the present invention.

«Third phosphate polymer»

The third phosphate polymer of the present invention is a phosphate polymer having a Mw of 10, 000 to 150, 000 and a Mw/Mn ratio of 1.0 to 2,6, obtained by copolymerization of the monomers 1, 2 and 3. From the viewpoint of exhibiting the dispersing effect and the viscosity reducing effect, the Mw of this phosphate polymer is 10, 000 or more, preferably 12, 000 or more, still more preferably 13,000 or more, further more preferably 14, 000 or more, even more preferably 15, 000 or more; from the viewpoint of prevention of gelation and polymerization due to crosslinkage and performance such as the dispersing effect and viscosity-reducing effect, the Mw is 150,000 or less, preferably 130,000 or less, still more preferably 120,000 or less, further more preferably 110,000 or less, even more preferably 100,000 or less; and from both the viewpoints, the Mw is preferably 12,000 to 130,000, more preferably 13, 000 to 120, 000, still more preferably 14, 000 to 110,000, further more preferably 15,000 to 100,000. The phosphate polymer has Mw in this range and a Mw/Mn ratio of 1.0 to 2.6. The Mw/Mn value is the degree of dispersion, and it is meant that as the Mw/Mn value approaches 1, the molecular weight distribution approaches monodispersion, while as the Mw/Mn value is made (increased) apart from 1, the molecular weight distribution is broadened.

A distinctive feature of the phosphate polymer of the invention having the Mw/Mn value described above is that the polymer while having a branched structure based on a diester structure has a very narrow molecular weight distribution. This phosphate polymer in the present invention can be produced preferably according to the process of the present invention described later.

The Mw/Mn value of the phosphate polymer of the invention as described above is 1.0 or more from the viewpoint of securing easiness in practical production, dispersibility, a viscosity reducing effect, and applicability to a broad range of material and temperature; the Mw/Mn value is preferably 2.6 or less, preferably 2.4 or less, more preferably 2.2 or

less, still more preferably 2.0 or less, further more preferably 1.8 or less, from the viewpoint of meeting both dispersibility and the viscosity reducing effect; and the Mw/Mn value is preferably 1.0 to 2.4, more preferably 1.0 to 2.2, still more preferably 1.0 to 2.0, further more preferably 1.0 to 1.8, from the comprehensive viewpoint of the above two.

The Mw and Mn of the third phosphate polymer of the present invention are measured by gel permeation chromatography (GPC) under the following conditions. The Mw/Mn value of the phosphate polymer in the present invention shall be calculated on the basis of a peak of the polymer.

[GPC conditions]
Columns: G4000PWXL + G2500PWXL (Tosoh Corporation)
Eluent: 0.2 M phosphate buffer/$CH_3CN$ = 9/1
Flow rate: 1.0 mL/min.
Column temperature: 40°C
Detection: RI
Sample size: 0.2 mg/mL
Standard: polyethylene glycol

It is considered that the phosphate polymer satisfying the Mw/Mn value described above has a suitable branched structure by suppressing crosslinkage with the diester monomer 3, to form a structure wherein adsorption groups occur densely in the molecule. It is estimated that by limiting the degree of dispersion Mw/Mn in the predetermined range, molecules of the same size are made nearly monodisperse in the system, and thus the amount of materials to be adsorbed (for example cement particles) could be increased. It is estimated that by satisfying the two, dense packing of materials to be adsorbed, such as cement particles is made feasible and is effective in satisfying both dispersibility and the viscosity reducing effect.

For dispersibility (to reduce the necessary amount of the polymer) and the viscosity reducing effect, it is more preferable that in a chart pattern showing molecular weight distribution obtained by GPC under the conditions described above, an area of molecular weights of 100,000 or more is not greater than 5% of the whole area in the chart.

[Monomer 1]

In the monomer 1, $R^3$ in the general formula (1) is preferably a hydrogen atom, AO is preferably a C2 to C4 oxyalkylene group and more preferably contains an ethylene oxy group (referred to hereinafter as EO group), wherein the EO group is preferably 70 mol% or more, more preferably 80 mol% or more, still more preferably 90 mol% or more, and particularly preferably every AO group is an EO group. X is preferably a hydrogen atom or a C1 to C18, particularly C1 to C12, especially C1 to C4, especially C1 or C2, alkyl group, particularly preferably a methyl group. Specific examples include w-methoxy polyoxyalkylene methacrylate, ω-methoxy polyoxyalkylene acrylate etc., among which ω-methoxy polyoxyalkylene methacrylate is preferable. In the formula (1), n is 3 to 200, preferably 4 to 120, from the viewpoint of the dispersibility of the polymer in a hydraulic composition and the viscosity conferring effect. The monomer 1 may be a monomer wherein AOs in repeating units whose number is n on average may be different and added at random and/or in block. AO can include a propylene oxy group etc. besides an EO group.

[Monomer 2]

The monomer 2 includes phosphoric mono (2- hydroxyethyl) methacrylate, phosphoric mono (2- hydroxyethyl) acrylate, polyalkylene glycol mono (meth) acrylate acid phosphate, etc. From the viewpoint of easiness of production and stability of qualities of the product, phosphoric mono (2- hydroxyethyl) methacrylate is preferable.

[Monomer 3]

The monomer 3 includes phosphoric di- [(2- hydroxyethyl) methacrylic acid] ester, phosphoric di- [(2- hydroxyethyl) acrylic acid] ester, etc. In particular, phosphoric di- [(2- hydroxyethyl) methacrylic acid] ester is preferable from the viewpoint of easiness of production and stability of qualities of the product.

Both the monomers 2 and 3 may be in the form of alkali metal salts, alkaline earth metal salts, ammonium salts or alkyl ammonium salts.

Each of m1 in the monomer 2 and m2 and m3 in the monomer 3 is preferably 1 to 20, more preferably 1 to 10, still more preferably 1 to 5.

It is suggested that because double bonds derived from the monomers disappear according to $^1$H-NMR under the conditions described below, the third phosphate polymer of the present invention has constitutional units derived from the monomers 1, 2 and 3 respectively.

[$^1$H-NMR conditions]

The polymer is dissolved in a water, then dried under reduced pressure, dissolved at a concentration of 3 to 4 wt% in heavy methanol, and measured by $^1$H-NMR. The degree of remaining double bonds is determined by an integrated value at 5.5 to 6.2 ppm. $^1$H-NMR measurement can be conducted by using Mercury 400 NMR manufactured by Varian, under conditions where the number of data points is 42052, the measurement range is 6410.3 Hz, the pulse width is 4.5 μs, the pulse waiting time is 10S, and the measurement temperature is 25.0°C.

That is, the third phosphate polymer of the present invention having the Mw/Mn value described above has, as its constitutional units, a constitutional unit derived from the monomer 1, a constitutional unit derived from the monomer 2 and a constitutional unit derived from the monomer 3. These constitutional units are constitutional units derived from the monomers 1, 2 and 3 incorporated into the polymer through addition-polymerization of the respective monomers after cleavage of their ethylenically unsaturated bonds. The proportion of these constitutional elements in the polymer depends on the charging ratio, and when the monomers used in copolymerization are the monomers 1 to 3 only, the molar ratio of each constitutional unit is considered to agree almost with the molar ratio of the monomer charged.

«Process for producing the phosphate polymer»

The present invention relates to a process for producing a phosphate polymer, which comprises copolymerizing the monomer 1, the monomer 2 and the monomer 3 at pH 7 or less. The phosphate polymer of the present invention can be produced by this process. Use of a monomer mixture containing the monomers 2 and 3 is also preferable.

The present inventors found that a polymer derived from specific phosphates is useful for reduction of the viscosity of a hydraulic composition as one purpose of the present invention. However, it was revealed that for the purpose of industrialization of such polymer, there is no sufficient disclosure in the prior art.

JP- A 11- 79811 supra discloses that methallyl sulfonic acid is copolymerized thereby coming to be useful for molecular weight regulation, but in a method of polymerizing it after neutralization disclosed in the Examples therein, a reaction solution becomes heterogeneous, and the polymer of industrially stable performance is hardly produced. On the other hand, JP- A 2000- 327386 supra uses, as a phosphate, a monoester only corresponding to the monomer 2 in the present invention, but for obtaining the monoester alone, a separation and purification process is necessary thus making industrial production disadvantageous in consideration of application to a hydraulic composition and production efficiency. Hereinafter, the process for producing the phosphate polymer obtained by using the monomers 1 to 3 is described in more detail.

As described above, the phosphate monomers obtained industrially as a mixture are hardly usable in a hydraulic composition, while in the process of the present invention, a monomer solution containing the monomer 2 and/or the monomer 3 is used in reaction in a specific pH range, whereby the monomer 1 is copolymerized with the monomers 2 and 3 as phosphate monomers thereby suppressing generation of crosslinkage (polymerization, gelation) even though the starting material contains the diester, and the resulting phosphate polymer can maintain excellent performance as a dispersant for a hydraulic composition, and thus the process is extremely useful in the field of a hydraulic composition.

The phosphate polymer obtained according to the present invention is a polymer obtained by copolymerizing an oxyalkylene group-containing monomer 1 represented by the general formula (1) with phosphoric acid group-containing monomers 2 and 3 represented by the general formulae (2) and (3).

Preferable examples of the monomers 1 to 3 are as described above, and the commercial products and reaction products described above can also be used.

In copolymerization of the monomers, the molar ratio of monomer 1 to monomers 2 and 3, that is, monomer 1/(monomer 2 + monomer 3) is preferably 5/95 to 95/5, more preferably 10/90 to 90/10. The molar ratio among monomers 1, 2 and 3, that is, monomer 1/monomer 2/monomer 3 is preferably 5 to 95/3 to 90/1 to 80, more preferably 5 to 96/3 to 80/1 to 60, provided that the total is 100. The molar ratio and mol% of the monomers 2 and 3 shall be calculated on the basis of the compound in an acid form (this applies hereinafter).

In the present invention, the ratio of the monomer 3 to the total monomers used in the reaction can be 1 to 60 mol%, particularly 1 to 30 mol%.

The molar ratio of the monomer 2 to the monomer 3 (monomer 2/monomer 3) can be 99/1 to 4/96, particularly 99/1 to 5/95.

Because it is generally expected that the monomer material containing the monomer 3 in such a range is significantly gelled, such monomer material is generally not used as a starting material for producing a polymer as a dispersant for a hydraulic composition. In the present invention, however, the pH of the monomer solution containing the monomer 2 and/or the monomer 3 is used at pH 7 or less in the reaction, whereby gelation is inhibited and a phosphate polymer preferable as a dispersant for a hydraulic composition can be produced at an industrially practical level.

Hereinafter, further preferable production conditions are described in detail from the viewpoint of gelation inhibition, regulation of suitable molecular weight and performance design of a dispersant for a hydraulic composition.

From this viewpoint, a chain transfer agent is used in copolymerization in an amount of preferably 4 mol% or more, more preferably 6 mol% or more, still more preferably 8 mol% or more, based on the number of moles of the monomers 1 to 3 in total. The upper limit of the amount of the chain transfer agent used is preferably 100 mol% or less, more preferably 60 mol% or less, still more preferably 30 mol% or less, even more preferably 15 mol% or less, based on the number of moles of the monomers 1 to 3 in total.

Specifically, it is preferable in the case (1) where n in the monomer 1 is 3 to 30 that:

(1-1) when the molar ratio of the monomers 2 and 3 to the monomers 1 to 3 is 50 mol% or more, the chain transfer agent is used in an amount of 6 to 100 mol%, particularly 8 to 60 mol%, based on the monomers 1 to 3, and
(1-2) when the molar ratio of the monomers 2 and 3 to the monomers 1 to 3 is less than 50 mol%, the chain transfer agent is used in an amount of 4 to 60 mol%, particularly 5 to 30 mol%, based on the monomers 1 to 3.

In the case (2) where n in the monomer 1 is higher than 30, it is preferable that the chain transfer agent is used in an amount of 6 to 50 mol%, particularly 8 to 40 mol%, based on the monomers 1 to 3.

The process of the present invention is conducted preferably such that the degree of conversion of the monomers 2 and 3 reaches 60% or more, preferably 70% or more, more preferably 80% or more, still more preferably 90% or more, further more preferably 95% or more, and the amount of the chain transfer agent used can be selected from this viewpoint. The degree of conversion of the monomers 2 and 3 is calculated according to the following equation:

$$\text{Degree of conversion (\%)} = [1 - Q/P] \times 100$$

Q: the ratio of the monomers 2 and 3 to X derived from the monomer 1 in the reaction system after the reaction is finished; and
P: the ratio of the monomers 2 and 3 to X derived from the monomer 1 in the reaction system when the reaction is initiated.

The ratio (mol%) of the monomers 2 and 3 in the phosphorus-containing compounds in the reaction system when the reaction is initiated or after the reaction is finished can be determined on the basis of measurement results of $^1$H-NMR mentioned above.

In production of the phosphate polymer according to the present invention, other copolymerizable monomers can be used in addition to the monomers 1 to 3. The other copolymerizable monomers can include allyl sulfonic acid and methallyl sulfonic acid or their alkali metal salts, alkaline earth metal salts, ammonium salts and amine salts. The monomers can also include acrylic monomers such as acrylic acid, methacrylic acid, crotonic acid, maleic acid, fumaric acid, itaconic acid and citraconic acid, or the monomer may be at least one kind of alkali metal salt, alkaline earth metal salt, ammonium salt, amine salt, methyl ester or ethyl ester thereof or an anhydrous compound such as maleic anhydride. The monomer can further include (meth) acrylamide, N- methyl (meth) acrylamide, N, N- dimethyl (meth) acrylamide, 2- (meth) acrylamide- 2- methasulfonic acid, 2- (meth) acrylamide- 2- ethane sulfonic acid, 2- (meth) acrylamide- 2- propane sulfonic acid, styrene, styrene sulfonic acid etc. The total amount of the monomers 1 to 3 in the whole monomers is preferably 30 to 100 mol%, more preferably 50 to 100 mol%, still more preferably 75 to 100 mol%, and from the viewpoint of achieving the performance of the first, second and third phosphate polymers of the invention as a dispersant, the amount of the monomers 1 to 3 can be more than **9.5** to 100 mol%, particularly 97 to 100 mol%, especially 100 mol%.

In the process of the present invention, the reaction temperature of the monomers 1 to 3 is preferably 40 to 100°C, more preferably 60 to 90°C, and the reaction pressure in terms of gauge pressure is preferably 101.3 to 111.5 kPa (1 to 1.1 atm), more preferably 101.3 to 106.4 kPa (1 to 1.05 atm).

In the process of the present invention, a monomer solution containing the monomer 2 and/or the monomer 3 prepared in a suitable solvent is copolymerized with another monomer at pH 7 or less, in the presence of a suitable amount of a chain transfer agent. Another copolymerizable monomer, a polymerization initiator etc. may also be used.

In the present invention, the monomers 1, 2 and 3 are reacted at pH 7 or less. In the present invention, the pH at 20°C of the reaction solution collected during the reaction (from the beginning to the end of the reaction) shall be pH during the reaction. Usually, the reaction may be initiated under conditions (monomer ratio, solvent, other components etc.) where the pH is made evidently 7 or less during the reaction.

When the reaction system is a non-aqueous system, the reaction solution can be measured after water in an amount to enable pH measurement is added to the reaction system.

It is considered that when the monomers 1 to 3 in the present invention are reacted under conditions exemplified in the following (1) and (2), the pH during the reaction is made usually 7 or less in consideration of other conditions. The pH may be transiently higher than 7 at an early stage of the reaction unless the reaction is adversely affected to form gel.

(1) A monomer solution containing all the monomers 1 to 3 at pH 7 or less is used in the copolymerization reaction

of the monomers 1 to 3.

(2) The copolymerization reaction of the monomers 1 to 3 is initiated at pH 7 or less. That is, the pH of the reaction system containing the monomers 1 to 3 is reduced to 7 or less before the reaction is initiated.

The reaction is conducted specifically as follows:

(i) A monomer solution containing the monomers 1 to 3 is adjusted to pH 7 or less before the copolymerization reaction is initiated.

(ii) A monomer solution containing the monomers 1 to 3 (pH is arbitrary, but is preferably 7 or less) is dropped into the reaction system.

(iii) A monomer solution containing the monomer 1 (pH is arbitrary, but is preferably 7 or less), a monomer solution containing the monomer 2 (pH is arbitrary, but is preferably 7 or less) and a monomer solution containing the monomer 3 (pH is arbitrary, but is preferably 7 or less) are dropped separately into the reaction system.

(iv) The reaction is carried out in a suitable combination of the foregoing (i) to (iii) . For example, a part of the monomer solution containing the monomers 1 to 3 (pH is arbitrary, but is preferably 7 or less) is charged into the reaction system, and the remainder of the monomer solution is dropped into the reaction system.

In the aforesaid (iii) and (iv), the conditions for dropping the monomer solution should be regulated such that the molar ratio of the monomers is not deviated from the predetermined ratio. In the aforesaid (ii) to (iv), other reaction conditions should be considered such that the pH of the reaction system containing the dropped monomers 1 to 3 becomes 7 or less, preferably 4 or less.

The pH of the reaction system can be regulated if necessary by using an inorganic acid (phosphoric acid, hydrochloric acid, nitric acid, sulfuric acid etc.) or NaOH, KOH, triethanol amine etc.

Among the monomer solutions used in the reaction, the monomer solution containing at least one of the monomers 2 and 3 is regulated preferably in the range of pH 7 or less as described above in order to reduce the pH of the reaction system to 7 or less during the reaction. The monomer solution at pH 7 or less contains at least one of the monomers 2 and 3 and may be a solution further containing the monomer 1 or a chain transfer agent or another monomer. The monomer solution containing the monomer 2 and/or the monomer 3 is preferably a water-containing system (that is, a water-containing solvent) in order to measure its pH, and in the case of a non-aqueous system, a necessary amount of water may be added for pH measurement. From the viewpoint of uniformity of the monomer solution, prevention of gelation and prevention of deterioration in performance, the pH is 7 or less, preferably 0.1 to 6, more preferably 0.2 to 4.5. The monomer 1 is also used preferably as a monomer solution at pH 7 or less. This pH is the one determined at 20°C.

From the viewpoint of stability in regulation of the molecular weight of the polymer and easiness in pH regulation during the reaction, the pH of the reaction system (polymerization system) charged finally with the monomers prior to the reaction is preferably 6 or less at 20°C, more preferably 5 or less, still more preferably 4 or less, further more preferably 2 or less. Preferably, the pH of the monomer solution containing the monomer 2 and/or the monomer 3 (the pH of the reaction system when the reaction is initiated), the pH of the reaction system during the reaction, and the pH of the reaction system when the reaction is finished are 7 or less.

When these monomers 1 to 3 are used in a water-free state (that is, they are added directly as liquid components), the pH of the polymerization system is inevitably reduced to 7 or less, and thus such method is also preferable. The pH of the final polymerization system prior to neutralization is preferably 6 or less, more preferably 5 or less, still more preferably 4 or less, further more preferably 2 or less.

[Chain transfer agent]

The chain transfer agent is a substance added for the purpose of chain transfer of the monomers, which has a function of bringing about chain transfer reaction in radical polymerization (reaction in which a growing polymer radical reacts with another molecule to transfer a radical active site) .

The chain transfer agent includes a thiol-based chain transfer agent, a halogenated hydrocarbon-based chain transfer agent etc., among which the thiol-based chain transfer agent is preferable.

The thiol-based chain transfer agent is preferably the one having a -SH group, particularly preferably the one represented by the general formula HS-R-Eg wherein R represents a group derived from a C1 to C4 hydrocarbon, E represents -OH, -COOM, -COOR' or $-SO_3M$ group, M represents a hydrogen atom, a monovalent metal, a divalent metal, an ammonium group or an organic amine group, R' represents a C1 to C10 alkyl group, and g is an integer of 1 to 2, and examples include mercaptoethanol, thioglycerol, thioglycolic acid, 2-mercaptopropionic acid, 3-mercaptopropionic acid, thiomalic acid, octyl thioglycolate, octyl 3-mercaptopropionate etc., and from the viewpoint of the chain transfer effect on the monomers 1 to 3 in copolymerization reaction, mercaptopropionic acid and mercaptoethanol are preferable, and mercaptopropionic acid is more preferable. One or more of these chain transfer agents can be used.

The halogenated hydrocarbon-based chain transfer agent includes carbon tetrachloride, carbon tetrabromide etc.

Other chain transfer agents can include α- methyl styrene dimer, terpinolene, α- terpinene, γ- terpinene, dipentene, 2- aminopropan- 1- ol etc. One or more kinds of these chain transfer agents can be used.

[Polymerization initiator]

In the process of the present invention, a polymerization initiator is preferably used, and the polymerization initiator is used particularly preferably in an amount of 5 mol% or more, particularly 7 to 50 mol%, especially 10 to 30 mol%, based on the number of moles of the monomers 1 to 3 in total.

As the polymerization initiator in an aqueous system, use is made of an ammonium salt or alkali metal salt of persulfuric acid, hydrogen peroxide or a water- soluble azo compound such as 2, 2'- azobis (2- amidinopropane) dihydrochloride or 2, 2'- azobis (2- methylpropionamide) dehydrate. Further, an accelerator such as sodium hydrogen sulfite or an amine compound can also be used in combination with the polymerization initiator.

[Solvent]

The process of the present invention can be carried out in solution polymerization, and the solvent used in this process includes water, or a hydrous solvent containing water and methyl alcohol, ethyl alcohol, isopropyl alcohol acetone or methyl ethyl ketone. In consideration of handling and reaction facilities, the solvent is preferably water. Particularly when an aqueous solvent is used, it is preferable from the viewpoint of the uniformity (handling) of the monomer mixture, the degree of reaction of the monomers, and prevention of crosslinkage due to hydrolysis of a pyrophosphoric acid type compound that the monomer solution containing the monomer 2 and/or the monomer 3 is used in copolymerization reaction at pH 7 or less, particularly pH 0.1 to 6, especially pH 0.2 to 4.

Now, one example of the process of the present invention is illustrated. A reaction container is charged with a predetermined amount of water, flushed with an inert gas such as nitrogen, and heated. A mixture of the monomers 1, 2 and 3 and a chain transfer agent dissolved in water, and a solution of a polymerization initiator in water, are prepared and added dropwise over 0.5 to 5 hours to the reaction container. For this addition, the respective monomers, the chain transfer agent and the polymerization initiator may be added separately, or alternatively a mixture solution of the monomers is previously charged into the reaction container, and only the polymerization initiator can be added dropwise into the mixture. That is, the chain transfer agent, the polymerization initiator and other additives may be added as an additive solution different from the monomer solution, or may be incorporated into the monomer solution prior to addition, but from the viewpoint of polymerization stability, it is preferable that the additive solution is added separately from the monomer solution to the reaction system. In either case, the pH of the solution containing the monomer 2 and/or the monomer 3 is preferably 7 or less. The copolymerization reaction is carried out while the pH is kept at 7 or less by an acid or the like, and preferably aging is conducted for a predetermined time. The polymerization initiator may be dropped all at once simultaneously with the monomers or added in divided portions, and preferably the polymerization is added in divided portions to reduce the unreacted monomers. For example, it is preferable that the polymerization initiator in an amount of 1/2 to 2/3 relative to the whole amount of the finally used polymerization initiator is added simultaneously with the monomers, and after the monomers are added and then aged for 1 to 2 hours, the remainder of the polymerization initiator is added thereto. If necessary, the mixture after aging is neutralized with an alkali, such as sodium hydroxide or the like, to give the phosphate polymer of the present invention. The process of the present invention is preferable as a process for producing a dispersant for a hydraulic composition containing the phosphate polymer of the present invention.

The total amount of the monomers 1, 2 and 3 and other copolymerizable monomers in the reaction system is preferably 5 to 80 wt%, more preferably 10 to 65 wt%, still more preferably 20 to 50 wt%.

«Dispersant for a hydraulic composition»

As a dispersant for a hydraulic composition, the phosphate polymer of the present invention can be used in every inorganic hydraulic powder (including various kinds of cement) showing curing properties by hydration reaction. The dispersant for a hydraulic composition containing the polymer of the present invention may be in the form of powder or liquid. The liquid is preferably the one (aqueous solution or the like) containing water as a solvent or as a dispersing medium from the viewpoint of operativeness and reduction in its burden on the environment. The content of the polymer of the present invention is preferably 10 to 100 wt%, more preferably 15 to 100 wt%, further more preferably 20 to 100 wt% in the solids of the dispersant of the present invention. The solids content of the liquid is preferably 5 to 40 wt%, more preferably 10 to 40 wt%, still more preferably 20 to 35 wt% from the viewpoint of easiness in production and operativeness. The dispersant of the present invention is used preferably 0.02 to 1 part by weight, more preferably 0.04

to 0.4 part by weight in terms of the solids content of the polymer, based on 100 parts by weight of hydraulic powder.

The cement includes normal Portland cement, rapid-hardening Portland cement, ultra-rapid-hardening Portland cement and ecocement, for example JIS R5214 etc. The hydraulic composition of the present invention may contain blast furnace slag, fly ash, silica fume etc. as hydraulic powder other than cement, or may contain non-hydraulic fine limestone powder etc. Silica fume cement or blast furnace cement mixed with cement may also be used.

The dispersant for a hydraulic composition according to the present invention can contain other additives (materials) . Mention can be made of AE agents such as resin soap, saturated or unsaturated aliphatic acids, sodium hydroxy stearate, lauryl sulfate, alkyl benzene sulfonic acid (salt) , alkane sulfonate, polyoxyalkylene alkyl (phenyl) ether, polyoxyalkylene alkyl (phenyl) ether sulfate (salt) , polyoxyalkylene alkyl (phenyl) ether phosphate (salt) , proteinous material, alkenyl succinic acid, and $\alpha$- olefin sulfonate; retardants based on oxycarboxylic acids such as gluconic acid, glucoheptonoic acid, arabonic acid, malic acid or citric acid and retardants based on sugars or sugar alcohols such as dextrin, monosaccharides, oligosaccharides and polysaccharides; frothers; thickeners; siliceous sand; AE water- reducing agents; rapid hardening agents or accelerators, for example soluble calcium salts such as calcium chloride, calcium nitrite, calcium nitrate, calcium bromide and calcium iodide, chlorides such as iron chloride and magnesium chloride, sulfate, potassium hydroxide, sodium hydroxide, carbonate, thiosulfate, formic acid (salt) , and alkanol amine; foaming agents; waterproofing agents such as resin acid (salt) , fatty ester, fat and oil, silicone, paraffin, asphalt and wax; blast furnace slag; fluidizing agents; defoaming agents based on dimethyl polysiloxane, polyalkyleneglycol fatty ester, mineral oil, fat and oil, oxyalkylene, alcohol and amide; foam- preventing agents; fly ash; high- performance water- reducing agents based on melamine sulfonic acid/ formalin condensate, aminosulfonic acid, and polycarboxylic acids including polymaleic acid; silica fume; rust preventives such as zinc nitrate, phosphate and zinc oxide; water- soluble polymers based on cellulose such as methyl cellulose and hydroxyethyl cellulose, natural products such as $\beta$- 1, 3- glucan and xanthane gum, and synthetic products such as polyacrylic amide, polyethylene glycol or an oleyl alcohol ethylene oxide adduct or a reaction product thereof with vinylcyclohexane diepoxide; and polymer emulsion of alkyl (meth) acrylate etc.

The dispersant for a hydraulic composition according to the present invention is also useful not only in the field of fresh concrete and vibrated concrete products but also in any fields of various kinds of concrete such as self-leveling concrete, refractory concrete, plaster concrete, gypsum slurry, lightweight or heavy concrete, AE concrete, repairing concrete, pre-packed concrete, tremie concrete, ground-improving concrete, grout concrete, and concrete in the cold.

«Hydraulic composition»

In the hydraulic composition as the subject of the dispersant of the present invention, the water/hydraulic powder ratio [weight percentage (wt%) of water to hydraulic powder in the hydraulic composition, referred to hereinafter as W/P] may be 65% or less, particularly 10 to 60%, more particularly 12 to 57%, especially 15 to 55%, more especially 20 to 55%.

The hydraulic composition of the present invention is a water- and hydraulic powder (cement)- containing paste, mortar, concrete or the like, and may contain aggregate. The aggregate includes small aggregate and grain aggregate, and the small aggregate is preferably mountain sand, land sand, river sand or crushed sand, and the grain aggregate is preferably mountain gravel, land gravel, river gravel or crushed stone. Depending on applications, lightweight aggregate may also be used. The terms of aggregate are in accordance with "Koncrete Soran" (Comprehensive Bibliography on Concrete) (published in June 10, 1998 by Gijutsushoin) .

According to the present invention described above, there is provided a process for producing a dispersant for a hydraulic composition, which comprises copolymerizing the monomer 1 represented by the general formula (1), the monomer 2 represented by the general formula (2) and the monomer 3 represented by the general formula (3) at pH 7 or less.

According to the present invention described above, there is provided a process for producing a dispersant for a hydraulic composition, which comprises copolymerizing the monomer 1 with a monomer mixture containing the monomers 2 and 3 at pH 7 or less.

According to the present invention described above, there is provided a process for producing a phosphate polymer-containing composition (phosphate polymer composition), which comprises copolymerizing the monomer 1 with a monomer mixture containing the monomers 2 and 3 at pH 7 or less.

According to the present invention described above, there is provided a dispersant for a hydraulic composition comprising a reaction product obtained by copolymerizing the monomer 1 with a monomer mixture containing the monomers 2 and 3 at pH 7 or less.

Detailed Description of the drawings

Fig. 1 is a schematic view of a torque testing machine and a recorder used in measurement of viscosity in the

Examples and Comparative Examples.

Fig. 2 is a torque/viscosity relationship using polyethylene glycol (Mw 20,000) used in calculation of viscosity in the Examples and Comparative Examples.

## Examples

The present invention is described in more detail by reference to the Examples. The Examples illustrate the present invention and are not intended to limit the present invention.

<Examples 1-1 to 1-3 and Comparative Examples 1-1 to 1-3>

A glass reaction container (four- necked flask) equipped with a stirrer was charged with 246 g water, then purged under stirring with nitrogen and heated to 80°C in a nitrogen atmosphere. 55 g ω- methoxy polyethyleneglycol monomethacrylate (number of ethylene oxide units added, 23; NK Ester M230G manufactured by Shin- Nakamura Chemical Co., Ltd.) , 27.9 g mixture (ethyleneglycol methacrylate phosphate manufactured by Aldrich) of phosphoric mono (2- hydroxyethyl) methacrylate (also referred to hereinafter as hydroxyethyl methacrylate monophosphate) and phosphoric di- [(2- hydroxyethyl) methacrylic acid] ester (also referred to hereinafter as hydroxyethyl methacrylate diphosphate) and 2.0 g (or 1.0 g) of 3- mercaptopropionic acid were mixed with and dissolved in 55 g water, followed by adding a predetermined amount of 20% aqueous sodium hydroxide solution to adjust the pH (Table 1) to give a monomer solution. This monomer solution and a solution of 3.36 g ammonium persulfate in 45 g water were added dropwise over 1.5 minutes respectively. After aging for 1 hour, a solution of 1.68 g ammonium persulfate in 15 g water was added dropwise thereto over 30 minutes and then aged for 1.5 hours at the same temperature (80°C) . After aging was finished, the reaction mixture was neutralized with 20% sodium hydroxide solution to give a copolymer.

<Comparative Examples 1-4 to 1-5>

A glass reaction container (four- necked flask) equipped with a stirrer was charged with 205 g water, 118 g w-methoxy polyethyleneglycol monomethacrylate (number of ethylene oxide units added, 2.3; NK Ester M230G manufactured by Shin- Nakamura Chemical Co., Ltd.) , 34.5 g mixture (ethyleneglycol methacrylate phosphate manufactured by Aldrich) of phosphoric mono (2- hydroxyethyl) methacrylate and phosphoric di- [(2- hydroxyethyl) methacrylic acid] ester, and 1.5 g (or 5.6 g) of 3- mercaptopropionic acid, and further 30% aqueous sodium hydroxide solution was added to adjust the pH to 9.4 (or 8.4) . Then, the mixture was flushed under stirring with nitrogen and heated to 60°C in a nitrogen atmosphere. Thereafter, a solution of 1.8 g ammonium persulfate in 9.0 g water was added dropwise thereto under stirring. During this dropwise addition, the reaction product was gelled.

The Examples and Comparative Examples above were summarized in Table 1. In Table 1, Mw is weight-average molecular weight, EO is ethylene oxide whose number is the mean number of EO units added, and the degree of conversion of phosphate monomers is the degree of conversion of the monomers 2 and 3 (this applies hereinafter). A chain transfer agent and a polymerization initiator charged that are charged starting materials were used in the molar ratio in the table relative to 100 moles of the total monomer components such as the monomers 1 to 3 etc. (this applies hereinafter).

Table 1

| | Charged starting materials | Molar ratio | Monomer solution pH(20°C) | Mw | Degree of conversion of phosphate monomers |
|---|---|---|---|---|---|
| Example 1-1 | Methoxy polyethyleneglycol monomethacrylate (EO=23) | 33.6 | 0.9 | 51000 | 99.7% |
| | Hydroxyethyl methacrylate monophosphate | 44.7 | | | |
| | Hydroxyethyl methacrylate diphosphate | 21.7 | | | |
| | Chain transfer agent: mercaptopropionic acid | 6.25 | | | |
| | Polymerization initiator: ammonium persulfate | 15 | | | |
| Example 1-2 | Methoxy polyethyleneglycol monomethacrylate (EO=23) | 33.6 | 3.4 | 23000 | 99.5% |
| | Hydroxyethyl methacrylate monophosphate | 44.7 | | | |
| | Hydroxyethyl methacrylate diphosphate | 21.7 | | | |
| | Chain transfer agent : mercaptopropionic acid | 12.5 | | | |
| | Polymerization initiator:ammonium persulfate | 15 | | | |

(continued)

| | Charged starting materials | Molar ratio | Monomer solution pH(20°C) | Mw | Degree of conversion of phosphate monomers |
|---|---|---|---|---|---|
| Example 1-3 | Methoxy polyethyleneglycol monomethacrylate (EO=23) | 33.6 | 6.0 | 34000 | 99.7% |
| | Hydroxyethyl methacrylate monophosphate | 44.7 | | | |
| | Hydroxyethyl methacrylate diphosphate | 21.7 | | | |
| | Chain transfer agent : mercaptopropionic acid | 12.5 | | | |
| | Polymerization initiator : ammonium persulfate | 15 | | | |
| Compar ative example 1-1 | Methoxy polyethyleneglycol monomethacrylate (EO=23) | 33.6 | 7.5 | 151000 | 99.9% |
| | Hydroxyethyl methacrylate monophosphate | 44.7 | | | |
| | Hydroxyethyl methacrylate diphosphate | 21.7 | | | |
| | Chain transfer agent : mercaptopropionic acid | 12.5 | | | |
| | Polymerization initiator:ammonium persulfate | 15 | | | |

(continued)

| | Charged starting materials | Molar ratio | Monomer solution pH(20°C) | Mw | Degree of conversion of phosphate monomers |
|---|---|---|---|---|---|
| Compar ative example 1-2 | Methoxy polyethyleneglycol monomethacrylate (EO=23) | 33.6 | 8.1 | gelled | - |
| | Hydroxyethyl methacrylate monophosphate | 44.7 | | | |
| | Hydroxyethyl methacrylate diphosphate | 21.7 | | | |
| | Chain transfer agent : mercaptopropionic acid | 6.25 | | | |
| | Polymerization initiator: ammonium persulfate | 15 | | | |
| Compar ative example 1-3 | Methoxy polyethyleneglycol monomethacrylate (EO=23) | 33.6 | 9.1 | gelled | - |
| | Hydroxyethyl methacrylate monophosphate | 44.7 | | | |
| | Hydroxyethyl methacrylate diphosphate | 21.7 | | | |
| | Chain transfer agent : mercaptopropionic acid | 12.5 | | | |
| | Polymerization initiator: ammonium persulfate | 15 | | | |

(continued)

| | Charged starting materials | Molar ratio | Monomer solution pH(20°C) | Mw | Degree of conversion of phosphate monomers |
|---|---|---|---|---|---|
| Compar ative example 1-4 | Methoxy polyethyleneglycol monomethacrylate (EO=23) | 46.5 | 9.4 | gelled | - |
| | Hydroxyethyl methacrylate monophosphate | 36.0 | | | |
| | Hydroxyethyl methacrylate diphosphate | 17.5 | | | |
| | Chain transfer agent : mercaptopropionic acid | 6.25 | | | |
| | Polymerization initiator : ammonium persulfate | 3.5 | | | |
| Compar ative example 1-5 | Methoxy polyethyleneglycol monomethacrylate (EO=23) | 46.5 | 8.4 | gelled | - |
| | Hydroxyethyl methacrylate monophosphate | 36.0 | | | |
| | Hydroxyethyl methacrylate diphosphate | 17.5 | | | |
| | Chain transfer agent: mercaptopropionic acid | 23.2 | | | |
| | Polymerization initiator : ammonium persulfate | 3.5 | | | |

<Test Example 1>

The copolymers in Table 1 obtained in Examples 1-1 to 1-3 and Comparative Examples 1-1 to 1-5 were used to examine mortar with formulation in Table 2. The results are shown in Table 3. Dispersibility and viscosity were evaluated by the following methods.

(1) Mortar formulation

Table 2

| W/C (%) | Unit quantity (g/batch) | | |
|---|---|---|---|
| | W | C | S |
| 40 | 160 | 400 | 700 |

The used materials in Table 2 are as follows.
C: Normal cement (1: 1 mixture of normal Portland cement manufactured by Taiheyo Cement Co., Ltd. and normal Portland cement manufactured by Sumitomo Osaka Cement Co., Ltd.)
W: Deionized water
S: Mountain sand from Kimitsu in Chiba Pref., JP (sand passing through a screen having 3.5 mm openings)
W/C: water (W)/cement (C) ratio (wt%) (This hereinafter applies.)

(2) Preparation of mortar

S in an amount of about 1/2 in the formulation shown in Table 2 was introduced into a container (1-L stainless steel beaker: inner diameter 120 mm), then C was introduced into it, and the remainder of S was introduced into it. The resulting mixture was stirred at 200 rpm for 25 seconds with a stirring machine Z-2310 (Tokyo Rika Kikai Co., Ltd.; stirring blades, 50 mm in height; inner diameter 5 mm x 6 blades/length, 110 mm) manufactured by EYELA, and then the previously mixed mixture of the dispersant and water was introduced into it over 5 seconds, and for 30 seconds after introduction, the material on the wall surface or between the stirring blades was scraped off, and after introduction of water, the mixture was kneaded for 3 minutes to prepare mortar. If necessary, a defoaming agent was added thereto such that the amount of air entrained was regulated to be 2% or less.

(3) Evaluation

(3-1) Dispersibility

Using a cone having a top opening diameter of 70 mm, a bottom opening diameter of 100 mm and a height of 60 mm, dispersibility was evaluated in terms of the amount (wt% of the effective component relative to cement, which is shown in % in the table) of the copolymer required for mortar flow value to become 200 mm. 200 mm of this mortar flow value is a mean value between the maximum mortar flow value and the mortar flow value measured in a direction perpendicular in a length of 1/2 to a segment giving the maximum value. A lower amount of the copolymer added is indicative of higher dispersibility.

(3-2) Viscosity

With a recorder connected to a torque testing machine shown in Fig. 1, the torque of the mortar was measured. According to a torque/viscosity relationship in Fig. 2 prepared previously by using polyethylene glycol (Mw 20, 000), the viscosity was calculated from the torque of the mortar. When the torque/viscosity relationship is prepared using polyethylene glycol, torque output voltage (mV) is recorded with a recorder at a monitor output of 60 W and an output signal DC 0 to 5 V.

Table 3

| | | Copolymer | Dispersibity (%) | Mortar viscosity (mPa·s) |
|---|---|---|---|---|
| Test example | 1-1 | Example 1-1 | 0.16 | 3417 |
| | 1-2 | Example 1-2 | 0.12 | 3503 |
| | 1-3 | Example 1-3 | 0.13 | 3383 |
| Comparative test example | 1-1 | Comparative example 1-1 | 0.26 | 3469 |
| | 1-2 | Comparative example 1-2 | not evaluated due to gelation | |
| | 1-3 | Comparative example 1-3 | not evaluated due to gelation | |
| | 1-4 | Comparative example 1-4 | not evaluated due to gelation | |
| | 1-5 | Comparative example 1-5 | not evaluated due to gelation | |

As can be seen from the results in Table 3, the phosphate polymers produced by copolymerizing a monomer solution containing the monomer 2 and/or the monomer 3 at pH 7 or less in Examples 1-1 to 1-3 exhibit higher dispersibility. On the other hand, when the solution containing the monomers 2 and 3 is copolymerized at pH 7 or more, the reaction mixture is gelled, or even if the copolymer is obtained, it is poor in dispersibility. The copolymers in the Examples give mortal viscosity equal to or higher than that of the Comparative Examples, and serves as a well-balanced dispersant.

<Examples 2-1 to 2-12>

A glass reaction container (four- necked flask) equipped with a stirrer was charged with 260 g water, then purged under stirring with nitrogen and heated to 80°C in a nitrogen atmosphere. 75 g ω- methoxy polyethyleneglycol monomethacrylate (number of ethylene oxide units added, 23; NK Ester M230G manufactured by Shin- Nakamura Chemical Co., Ltd.) , 18.9 g mixture (Phosmer M manufactured by Uni- Chemical Co., Ltd.) of phosphoric mono (2-hydroxyethyl) methacrylate and phosphoric di- [(2- hydroxyethyl) methacrylic acid] ester, and 0.88 g 3- mercaptopropionic acid were mixed with and dissolved in 75 g water. The resulting solution (whose pH is shown in Table 4) and a solution of 3.00 g ammonium persulfate in 45 g water were added dropwise over 1.5 hours respectively. The pH during the reaction is shown in Tables 4 and 5, and this pH was determined by collecting the reaction solution after the dropwise addition was finished, cooling the solution to ordinary temperature (20°C) and measuring the pH of the solution. After aging for 1 hour, a solution of 1.50 g ammonium persulfate in 15 g water was added dropwise thereto over 30 minutes and then aged for 1.5 hours at the same temperature (80°C) . After aging was finished, the reaction mixture was neutralized with 25 g of 20% sodium hydroxide solution to give a copolymer having a Mw of 37000. Copolymers in Examples 2- 2 and 2- 12 were synthesized by the same method as described above.

<Comparative Example 2-1>

A glass reaction container (four- necked flask) equipped with a stirrer was charged with 247 g water, flushed under stirring with nitrogen and heated to 80°C in a nitrogen atmosphere. 55 g ω- methoxy polyethyleneglycol monomethacrylate (number of ethylene oxide units added, 23; NK Ester M230G manufactured by Shin- Nakamura Chemical Co., Ltd.) , 29.8 g mixture (Light Ester P1M manufactured by Kyoeisha Chemical Co., Ltd.) of phosphoric mono (2-hydroxyethyl) methacrylate and phosphoric di- [(2- hydroxyethyl) methacrylic acid] ester, and 1.06 g of 3- mercaptopropionic acid were mixed with and dissolved in 55 g water, followed by adding 57.5 g of 20% aqueous sodium hydroxide solution to adjust the pH to 8.0. The resulting monomer solution and a solution of 5.43 g ammonium persulfate in 45 g water were added dropwise thereto for 1.5 hours respectively. Because the monomer solution was heterogeneous, the monomer solution was stirred during dropwise addition of the two solutions. After the dropwise addition was finished, the reaction product was gelled.

<Comparative Example 2-2>

A glass reaction container (four- necked flask) equipped with a stirrer was charged with 180 g water, 94 g ω-methoxy polyethyleneglycol monomethacrylate (number of ethylene oxide units added, 23; NK Ester M230G manufactured by Shin- Nakamura Chemical Co., Ltd.) , 8.8 g sodium methallyl sulfonate (Wako Pure Chemical Industries, Ltd.) , and 32.1 g mixture (ethyleneglycol methacrylate phosphate manufactured by Aldrich) of phosphoric mono (2- hydroxyethyl) methacrylate and phosphoric di- [(2- hydroxyethyl) methacrylic acid] ester, followed by adding 36.9 g of 30% aqueous sodium hydroxide solution to adjust the pH to 8.9. The mixed solution remained turbid. Thereafter, the mixture was flushed under stirring with nitrogen and heated to 60°C in a nitrogen atmosphere. Thereafter, a solution of 8.10 g ammonium persulfate in 36 g water was added dropwise thereto over 1 hour. After the dropwise addition was finished, the reaction mixture was reacted for 3 hours and aged at the same temperature to give a copolymer having a Mw of 47000.

<Comparative Example 2-3>

A glass reaction container (four-necked flask) equipped with a stirrer was charged with 152 g water, then flushed under stirring with nitrogen and heated to 80°C in a nitrogen atmosphere. 225.6 g ω-methoxy polyethyleneglycol monomethacrylate (number of ethylene oxide units added, 23; NK Ester M230G manufactured by Shin-Nakamura Chemical Co., Ltd.), 11.6 g methacrylic acid and 1.8 g 3-mercaptopropionic acid were dissolved in 56.4 g water to give a solution (whose pH is shown in Table 5). This solution and a solution of 2.6 g ammonium persulfate in 45 g water were added dropwise thereto over 4 hours respectively. Thereafter, the reaction mixture was aged for 1 hour at the same temperature (80°C) . After aging was finished, the reaction mixture was neutralized with 7.9 g of 48% aqueous sodium hydroxide solution to give a copolymer having a Mw of 42000.

Examples 2-1 to 2-12 and Comparative Examples 2-1 to 2-3 were summarized in Tables 4 and 5. The pH during reaction (20°C) is the one when the reaction was finished.

Table 4

| | Charge starting materials | Molar ratio | pH | | Mw | Degree of conversion of phosphate monomers |
|---|---|---|---|---|---|---|
| | | | Monomer solution (20°C) | During reaction (20°C ) | | |
| Example 2-1 | Methoxy polyethyleneglycol monomethacrylate (EO=23) | 51.3 | 1.4 | 1.3 | 37000 | 99.8% |
| | Hydroxyethyl methacrylate monophosphate | 35.0 | | | | |
| | Hydroxyethyl methacrylate diphosphate | 13.7 | | | | |
| | Chain transfer agent: Mercaptopropionic acid | 6.3 | | | | |
| | Polymerization initiator : ammonium persulfate | 15 | | | | |

(continued)

| | Charge starting materials | Molar ratio | pH | | Mw | Degree of conversion of phosphate monomers |
|---|---|---|---|---|---|---|
| | | | Monomer solution (20°C) | During reaction (20°C ) | | |
| Example 2-2 | Methoxy polyethyleneglycol monomethacrylate (EO=9) | 35.2 | 1.0 | 0.9 | 29000 | 99.6% |
| | Hydroxyethyl methacrylate monophosphate | 46.6 | | | | |
| | Hydroxyethyl methacrylate diphosphate | 18.2 | | | | |
| | Chain transfer agent : Mercaptopropionic acid | 12.5 | | | | |
| | Polymerization initiator : ammonium persulfate | 15 | | | | |
| Example 2-3 | Methoxy polyethylene glycol monomethacrylate (EO=9) | 51.3 | 1.2 | 1.1 | 42000 | 99.8% |
| | Hydroxyethyl methacrylate monophosphate | 35.0 | | | | |
| | Hydroxyethyl methacrylate diphosphate | 13.5 | | | | |
| | Chain transfer agent : Mercaptopropionic acid | 6.3 | | | | |
| | Polymerization initiator : ammonium persulfate | 15 | | | | |

(continued)

| | Charge starting materials | Molar ratio | pH | | Mw | Degree of conversion of phosphate monomers |
|---|---|---|---|---|---|---|
| | | | Monomer solution (20°C) | During reaction (20°C ) | | |
| Example 2-4 | Methoxy polyethylene glycol monomethacrylate (EO=9) | 76.0 | 1.4 | 1.3 | 28500 | 99.8% |
| | Hydroxyethyl methacrylate monophosphate | 17.3 | | | | |
| | Hydroxyethyl methacrylate diphosphate | 6.7 | | | | |
| | Chain transfer agent : Mercaptopropionic acid | 6.3 | | | | |
| | Polymerization initiator : Ammonium persulfate | 15 | | | | |
| Example 2-5 | Methoxy potyethylene glycol monomethacrylate (EO=23) | 31.1 | 1.1 | 1.0 | 51000 | 99.9% |
| | Hydroxyethyl methacrylate monophosphate | 49.5 | | | | |
| | Hydroxyethyl methacrylate diphosphate | 19.4 | | | | |
| | Chain transfer agent : Mercaptopropionic acid | 6.3 | | | | |
| | Polymerization initiator : Ammonium persulfate | 15 | | | | |

(continued)

| | Charge starting materials | Molar ratio | pH | | Mw | Degree of conversion of phosphate monomers |
|---|---|---|---|---|---|---|
| | | | Monomer solution (20°C) | During reaction (20°C ) | | |
| Example 2-6 | Methoxy polyethylene glycol monomethacrylate (EO=23) | 76.0 | 1.7 | 1.6 | 33000 | 99.9% |
| | Hydroxyethyl methacrylate monophosphate | 17.3 | | | | |
| | Hydroxyethyl methacrylate diphosphate | 6.7 | | | | |
| | Chain transfer agent : Mercaptopropionic acid | 6.3 | | | | |
| | Polymerization initiator : Ammonium persulfate | 15 | | | | |
| Example 2-7 | Methoxy polyethyleneglycol monomethacrylate (EO=60) | 51.3 | 1.8 | 1.7 | 37000 | 99.8% |
| | Hydroxyethyl methacrylate monophosphate | 35.0 | | | | |
| | Hydroxyethyil methacrylate diphosphate | 13.7 | | | | |
| | Chain transfer agent : Mercaptopropionic acid | 12.5 | | | | |
| | Polymerization initiator : Ammonium persuifate | 15 | | | | |

(continued)

| | Charge starting materials | Molar ratio | pH | | Mw | Degree of conversion of phosphate monomers |
|---|---|---|---|---|---|---|
| | | | Monomer solution (20°C) | During reaction (20°C ) | | |
| Example 2-8 | Methoxy polyethyleneglycol monomethacrylate (EO=60) | 20.1 | 1.7 | 1.6 | 45000 | 99.8% |
| | Hydroxyethyl methacrylate monophosphate | 35.0 | | | | |
| | Hydroxyethyl methacrylate diphosphate | 13.7 | | | | |
| | Methyl acrylate | 31.2 | | | | |
| | Chain transfer agent : Mercaptopropionic acid | 12.5 | | | | |
| | Polymerization initiator : Ammonium persulfate | 15 | | | | |
| Example 2-9 | Methoxy polyethyleneglycol monomethacrylate (EO=9) | 35.2 | 1.0 | 0.9 | 51000 | 99.7% |
| | Hydroxyethyl methacrylate monophosphate | 46.6 | | | | |
| | Hydroxyethyl methacrylate diphosphate | 18.2 | | | | |
| | Chain transfer agent : Mercaptopropionic acid | 6.3 | | | | |
| | Polymerization initiator : Ammonium persulfate | 15 | | | | |

Table 5

| | Charged starting materials | Molar ratio | pH | | Mw | Degree of conversion of phosphate monomers |
|---|---|---|---|---|---|---|
| | | | Monomer solution (20°C) | During reaction (20°C) | | |
| Example 2-10 | Methoxy polyethyleneglycol monomethacrylate (EO=23) | 35.2 | 1.0 | 0.9 | 21000 | 96.7% |
| | Hydroxyethyl methacrylate monophosphate | 46.6 | | | | |
| | Hydroxyethyl methacrylate diphosphate 18.2 | 18.2 | | | | |
| | Chain transfer agent : Mercaptopropionic acid | 25.0 | | | | |
| | Polymerization initiator : ammonium persulfate | 15 | | | | |
| Example 2-11 | Methoxy polyethyleneglycol monomethacrylate (EO=23) | 35.2 | 1.0 | 0.9 | 21000 | 89.7% |
| | Hydroxyethyl methacrylate monophosphate | 46.6 | | | | |
| | Hydroxyethyl methacrylate diphosphate | 18.2 | | | | |
| | Chain transfer agent : Mercaptopropionic acid | 50.0 | | | | |
| | Polymerization initiator: ammonium persulfate | 15 | | | | |

(continued)

| | Charged starting materials | Molar ratio | pH | | Mw | Degree of conversion of phosphate monomers |
|---|---|---|---|---|---|---|
| | | | Monomer solution (20°C) | During reaction (20°C) | | |
| Example2 -12 | Methoxy polyethyleneglycol monomethacrylate (EO=23) | 35.2 | 1.0 | 0.9 | 19000 | 78.2% |
| | Hydroxyethyl methacrylate monophosphate | 46.6 | | | | |
| | Hydroxyethyl methacrylate diphosphate 18.2 | 18.2 | | | | |
| | Chain transfer agent : mercaptopropionic acid | 100.0 | | | | |
| | Polymerization initiator :ammonium persulfate | 15 | | | | |
| Comparat ive example 2-1 | Methoxy polyethyleneglycol monomethacrylate (EO=23) | 31.1 | 9.5 | 8.0 | gelled | - |
| | Hydroxyethyl methacrylate monophosphate | 49.5 | | | | |
| | Hydroxyethyl methacrylate diphosphate | 19.4 | | | | |
| | Chain transfer agent : mercaptopropionic acid | 6.3 | | | | |
| | Polymerization initiator: ammonium persulfate | 15 | | | | |

(continued)

| | Charged starting materials | Molar ratio | pH | | Mw | Degree of conversion of phosphate monomers |
|---|---|---|---|---|---|---|
| | | | Monomer solution (20°C) | During reaction (20°C) | | |
| Comparat ive example 2-2 | Methoxy polyethyleneglycol monomethacrylate (EO=23) | 35.6 | 9.6 | 8.1 | 47000 | 99.8% |
| | Hydroxyethyl methacrylate monophosphate | 27.5 | | | | |
| | Hydroxyethyl methacrylate diphosphate | 13.4 | | | | |
| | Na methallyl sulfonate | 23.5 | | | | |
| | Polymerization initiator : ammonium persulfate | 15 | | | | |
| Comparat ive example 2-3 | Methoxy polyethyleneglycol monomethacrylate (EO=23) | 60.0 | 3.8 | 3.0 | 42000 | - |
| | Methacrylic acid | 40.0 | | | | |
| | Chain transfer agent : Mercaptopropionic acid | 5.0 | | | | |
| | Polymerization initiator: ammonium persulfate | 3.4 | | | | |

<Test Example 2>

The copolymers in Tables 4 and 5 obtained in Examples 2-1 to 2-12 and Comparative Examples 2-1 to 2-3 were examined for dispersibility and viscosity in the same manner as in Example 1-1 etc. The results are shown in Table 6. However, dispersibility was evaluated in terms of the amount of the copolymer required for mortar flow value to become 180 mm.

Table 6

| | | Copolymer | Dispersibity (%) | Mortar viscosity (mPa·s) |
|---|---|---|---|---|
| Test example | 2-1 | Example 2-1 | 0.11 | 2731 |
| | 2-2 | Example 2-2 | 0.23 | 2670 |
| | 2-3 | Example 2-3 | 0.20 | 2614 |
| | 2-4 | Example 2-4 | 0.21 | 2946 |
| | 2-5 | Example 2-5 | 0.17 | 2359 |
| | 2-6 | Example 2-6 | 0.34 | 3000 |
| | 2-7 | Example 2-7 | 0.14 | 3160 |
| | 2-8 | Example 2-8 | 0.17 | 3266 |
| | 2-9 | Example 2-9 | 0.32 | 2854 |
| | 2-10 | Example 2-10 | 0.21 | 2926 |
| | 2-11 | Example 2-11 | 0.23 | 2759 |
| | 2-12 | Example 2-12 | 0.45 | 2992 |
| Comparative test example | 2-1 | Comparative example 2-1 | not evaluated due to gelation | |
| | 2-2 | Comparative example 2-2 | 0.52 | 3275 |
| | 2-3 | Comparative example 2-3 | 1.0 | — |

As can be seen from the results in Table 6, the phosphate polymers produced by copolymerizing a monomer solution containing the monomer 2 and/or the monomer 3 at pH 7 or less in Examples 2-1 to 2-12 exhibit higher dispersibility. These polymers serve as a dispersant excellent in balance between dispersibility and the viscosity-reducing effect. In Comparative Example 2-3, the mortar flow was only 120 mm even if the amount of the polymer added was 1.0%, and thus measurement of mortar viscosity was not conducted.

As can be seen from the results in Examples 2-2 and Examples 2-9 to 2-12, the ratio of the chain transfer agent is preferably 4 mol% or more relative to the number of moles of the monomers 1 to 3 in total, and the polymer in Example 2-2 where the ratio of the chain transfer agent is 12.5 mol% relative to the number of moles of the monomers 1 to 3 in total and the polymer in Example 2-10 where the ratio is 25 mol% are excellent in the degree of conversion of phosphate monomers, with the molecular weight of the polymer being in a suitable range, and are thus preferable from the comprehensive viewpoint of dispersibility and the viscosity reducing effect.

<Example 3>

A glass reaction container (four- necked flask) equipped with a stirrer was charged with 100 g water, then flushed under stirring with nitrogen and heated to 80°C in a nitrogen atmosphere. 110 g ω- methoxy polyethyleneglycol monomethacrylate (number of ethylene oxide units added, 23; NK Ester M230G manufactured by Shin- Nakamura Chemical Co., Ltd.) , 64.6 g mixture (Phosmer M manufactured by Uni- Chemical Co., Ltd.) of phosphoric mono (2-hydroxyethyl) methacrylate and phosphoric di- [(2- hydroxyethyl) methacrylic acid] ester, and 4.26 g 3- mercaptopropionic acid were mixed with, and dissolved in, 110 g water to give a solution (pH 0.9/20°C) . This solution and a solution of 7.04 g ammonium persulfate in 45 g water were added dropwise thereto over 1.5 hours respectively. After aging for 1 hour, a solution of 3.52 g ammonium persulfate in 15 g water was added dropwise thereto over 30 minutes and then aged for 1.5 hours at the same temperature (80°C) . Before aging, the pH during the reaction was measured in the same manner as in Example 2- 1 etc. After aging was finished, the reaction mixture was neutralized with 34 g of 48% sodium hydroxide solution to give a copolymer having a Mw of 35000.

Using the copolymer obtained in Example 3, the dispersibility and viscosity were evaluated in the same manner as in Example 1-1 etc. The results are shown in Table 7.

Table 7

| | Charged starting materials | Molar ratio | pH | | Mw | Degree of conversion of phosphate monomers | Dispersibility (%) | Mortar viscosity (mPa·s) |
|---|---|---|---|---|---|---|---|---|
| | | | Monomer solution (20℃) | During reaction (20℃) | | | | |
| Example 3 | Methoxy polyethyleneglycol monomethacrylate (EO=23) | 32 | 0.9 | 0.8 | 35000 | 99.2 | 0.17 | 2410 |
| | Hydroxyethyl methacrylate monophosphate | 49 | | | | | | |
| | Hydroxyethyl methacrylate diphosphate | 19 | | | | | | |
| | Chain transfer agent: mercaptopropionic acid | 13 | | | | | | |
| | Polymerization initiator : ammonium persulfate | 15 | | | | | | |

<Examples 4-1 to 4-6 and Comparative Examples 3-1 to 3-3>

The copolymers in Table 9 obtained by copolymerizing monomers in a charging ratio shown in Table 9 were examined for dispersibility and viscosity for mortar by the method shown later. The results are shown in Table 9. The Mw and Mw/Mn of each copolymer were measured by GPC under the conditions described above. Production of the copolymers was conducted in the same manner as in Production Example 1 below.

[Production Example I]

A glass reaction container (four- necked flask) equipped with a stirrer was charged with 297.0 g water, flushed under stirring with nitrogen and heated to 80°C in a nitrogen atmosphere. 35.0 g ω- methoxy polyethyleneglycol monomethacrylate (number of ethylene oxide units added, 9; NK Ester M90G manufactured by Shin- Nakamura Chemical Co., Ltd.) , 38.3 g mixture (Phosmer M manufactured by Uni- Chemical Co., Ltd.) of phosphoric mono (2- hydroxyethyl) methacrylate and phosphoric di- [(2- hydroxyethyl) methacrylic acid] ester, and 11.0 g mercaptopropionic acid were mixed with one another. This mixture and a solution of 4.73 g ammonium persulfate in 45.0 g water were added dropwise thereto over 1.5 hours respectively. After aging for 1 hour, a solution of 2.36 g ammonium persulfate in 15. 0 g water was added dropwise thereto over 30 minutes and then aged for 1.5 hours at the same temperature (80°C) . When the reaction was finished, the pH was 0.9. After aging was finished, the reaction mixture was neutralized to pH 5.0 with 20% aqueous sodium hydroxide solution to give a copolymer having a weight- average molecular weight of 21000 in Example 4- 1. Copolymers in Examples 4- 2 to 4- 6 were produced in the same manner. Copolymers in Comparative Examples 3- 1 to 3- 3 were produced in the same manner as in Comparative Example 2- 3 supra.

(1) Mortar formulation

Table 8

| W/C (%) | Unit quantity (g/batch) | | |
|---|---|---|---|
| | W | C | S |
| 40 | 160 | 400 | 700 |

The used materials in Table 8 are as follows.
C: Normal cement (1 : 1 mixture of normal Portland cement manufactured by Taiheyo Cement Co., Ltd. and normal Portland cement manufactured by Sumitomo Osaka Cement Co., Ltd.)
W: Deionized water
S: Mountain sand from Kimitsu in Chiba Pref., JP (sand passing through a screen having 3.5 mm openings)

(2) Preparation of mortar

S in an amount of about 1/2 in the formulation shown in Table 2 was introduced into a container (1-L stainless steel beaker: inner diameter 120 mm), then C was introduced into it, and the remainder of S was introduced into it. The resulting mixture was stirred at 200 rpm for 25 seconds with a stirring machine Z-2310 (Tokyo Rika Kikai Co., Ltd.; stirring blades, 50 mm in height; inner diameter 5 mm × 6 blades/length, 110 mm) manufactured by EYELA, and then the previously mixed mixture of the dispersant and water was introduced into it over 5 seconds, and for 30 seconds after introduction, the material on the wall or between the stirring blades was scraped off, and after introduction of water, the mixture was kneaded for 3 minutes to prepare mortar. If necessary, a defoaming agent was added thereto such that the amount of air entrained was regulated to be 2% or less.

(3) Evaluation

(3-1) Dispersibility

Using a cone having a top opening diameter of 70 mm, a bottom opening diameter of 100 mm and a height of 60 mm, dispersibility was evaluated in terms of the amount (wt% of the effective component relative to cement, which is shown in % in the table) of the copolymer required for mortar flow value to become 200 mm. 200 mm of this mortar flow value is a mean value between the maximum mortar flow value and the mortar flow value measured in a direction perpendicular in a length of 1/2 to a segment giving the maximum value. A lower amount of the copolymer added is indicative of higher dispersibility. In this evaluation, the amount of the polymer added is desirably 0.3% or less.

(3-2) Viscosity

With a recorder connected to a torque testing machine shown in Fig. 1, the torque of the mortar was measured. According to a torque/viscosity relationship in Fig. 2 prepared previously by using polyethylene glycol (Mw 20,000), the viscosity was calculated from the torque of the mortar. When the torque/viscosity relationship is prepared using polyethylene glycol, torque output voltage (mV) is recorded with a recorder at a monitor output of 60 W and an output signal DC 0 to 5 V. In this evaluation, the mortar viscosity is desirably 4200 mPa.s or less.

Table 9

| | Charged starting materials | | | | | | | | Copolymer | | Dispersibility (%) | Mortar viscosity (mPa·s) |
|---|---|---|---|---|---|---|---|---|---|---|---|---|
| | Monomer 1 | | Monomer 2 | Monomer 3 | Charged ratio of monomers (mol-%) | | | | Mw (GPC) | Mw/Mn (GPC) | | |
| | Structure | n in formula (1) | | | 1 | 2 | 3 | Others | | | | |
| Example 4-1 | MEPEG-E | 9 | HEMA-MPE | HEMA-DPE | 35 | 46 | 19 | 0 | 21,000 | 1.14 | 0.243 | 2675 |
| Example 4-2 | MEPEG-E | 9 | HEMA-MPE | HEMA-DPE | 35 | 46 | 19 | 0 | 51,000 | 1.51 | 0.324 | 2854 |
| Example 4-3 | MEPEG-E | 23 | HEMA-MPE | HEMA-DPE | 31 | 48 | 21 | 0 | 51,000 | 1.50 | 0.166 | 2359 |
| Example 4-4 | MEPEG-E | 23 | HEMA-MPE | HEMA-DPE | 51 | 34 | 15 | 0 | 43,000 | 1.46 | 0.105 | 2731 |
| Example 4-5 | MEPEG-E | 23 | HEMA-MPE | HEMA-DPE | 51 | 25 | 24 | 0 | 45,000 | 1.50 | 0.128 | 2774 |
| Example 4-6 | MEPEG-E | 120 | HEMA-MPE | HEMA-DPE | 31 | 48 | 21 | 0 | 41,000 | 1.23 | 0.119 | 2938 |
| Comparative example 3-1 | MEPEG-E | 9 | MAA | | 35 | 65 | | 0 | 42,000 | 1.72 | 0.100 | 3122 |
| Comparative example 3-2 | MEPEG-E | 23 | MAA | | 25 | 75 | | 0 | 52,000 | 1.71 | 0.082 | 3173 |
| Comparative example 3-3 | MEPEG-E | 120 | MAA | | 20 | 80 | | 0 | 72,000 | 1.77 | 0.100 | 4048 |

The symbols in the table are meant as follows:

- MEPEG-E: ω-methoxy polyethyleneglycol monomethacrylate
- HEMA- MPE: phosphoric mono (2- hydroxyethyl) methacrylate
- HEMA- DPE: phosphoric di[(2- hydroxyethyl) methacrylic acid] ester
- MAA: methacrylic acid
- Mw: weight-average molecular weight
- Mn: number-average molecular weight

<Examples 5-1 to 5-3>

Copolymers in Table 11 obtained by copolymerizing monomers in a charging ratio shown in Table 11 were used in the following concrete test. The Mw and Mw/Mn of each copolymer are those determined by GPC under the conditions described above. The symbols in Table 11 refer to the same as in Example 4-1 etc. Production of the copolymers was conducted as shown in Production Example II below.

[Production Example II]

A glass reaction container (four- necked flask) equipped with a stirrer was charged with 726.3 g water, flushed under stirring with nitrogen and heated to 80°C in a nitrogen atmosphere. 150.0 g ω- methoxy polyethyleneglycol monomethacrylate (number of ethylene oxide units added, 9; NK Ester M90G manufactured by Shin- Nakamura Chemical Co., Ltd.) , 28.2 g mixture (Phosmer M manufactured by Uni- Chemical Co., Ltd.) of phosphoric mono (2- hydroxyethyl) methacrylate and phosphoric di- [(2- hydroxyethyl) methacrylic acid] ester, and 5.34 g 3- mercaptopropionic acid were mixed with one another. This mixture and a solution of 9.19 g ammonium persulfate in 45.0 g water were added dropwise thereto over 1.5 hours respectively. After aging for 1 hour, a solution of 4.59 g ammonium persulfate in 15. 0 g water was added dropwise thereto over 30 minutes and then aged for 1.5 hours at the same temperature (80°C) . When the reaction was finished, the pH was 1.3. After aging was finished, the reaction mixture was neutralized to pH 5.5 with 20% aqueous sodium hydroxide solution to give a copolymer having a Mw of 27000 in Example 5- 1. Similarly, copolymers in Examples 5- 2 and 5- 3 were produced.

[Concrete Test]

(1) Concrete formulation

Concrete formulation is shown in Table 10.

Table 10

| W/C (%) | Unit quantity (kg/m$^3$) | | | |
|---|---|---|---|---|
| | W | C | S | G |
| 40 | 165 | 413 | 793 | 960 |

The used materials in Table 10 are as follows.
C: Normal Portland cement (1 : 1 mixture of normal Portland cement manufactured by Taiheyo Cement Co., Ltd. and normal Portland cement manufactured by Sumitomo Osaka Cement Co., Ltd.)
W: Deionized water
S : Small aggregate, mountain sand from Kimitsu in Chiba Pref., JP.
G: Grain aggregate, ground lime from Mt. Chokei in Kochi Pref . , JP.

(2) Preparation of concrete

30- L concrete was prepared by stirring for 10 seconds without water and for 90 seconds after introduction of mixing water in a forced twin- screw mixer manufactured by IHI. The amount of the copolymer added was regulated such that the slump flow value became 35.0 to 42.0 cm. The slump flow value is a mean value between the maximum slump flow value and the slump flow value measured in a direction perpendicular in a length of 1/2 to a segment giving the maximum value. The amount of the copolymer required to attain this slump flow is shown in Table 14. The slump flow test of concrete was in accordance with JIS A 1150 (maximum dimension of grain aggregate (G) , 20 mm; concrete

temperature, 20 to 22°C; sample packing, concrete was divided into 3 layers, and each of the layers was stuffed and poked evenly 25 times with a poking rod) . The concrete with the copolymer added was examined in a slump test (JIS A 1101) . The amount of air in concrete (JIS A 1128) was regulated such that the amount of air entrained became 3.5 to 5.5 vol% by adding a defoaming agent and an AE agent.

(3) Evaluation of concrete

The concrete to which the copolymer prepared above had been added was examined by a method of testing the compression strength of concrete (JIS A 1108, aging in water, 7-day strength). The results are shown in Table 11.

Table 11

| | | Charge starting material | | | | | | | Copolymer | | | | | | |
|---|---|---|---|---|---|---|---|---|---|---|---|---|---|---|---|
| | | Monomer 1 | | Monomer 2 | Monomer 3 | Charging ratio of monomers (mol%) | | | Mw (GPC) | Mw/Mn (GPC) | Amount of copolymer added (%) | Amount of air (%) | Slump (cm) | Slump flow (cm) | Compression strength ($N/mm^2$) |
| | | Structure | n in formula (1) | | | 1 | 2 | 3 | | | | | | | |
| Example | 5-1 | MEPEG-E | 9 | HEMA-MPE | HEMA-DPE | 76 | 17 | 7 | 27000 | 1.31 | 0.340 | 5.1 | 22.5 | 38.0 | 40.7 |
| Example | 5-2 | MEPEG-E | 23 | HEMA-MPE | HEMA-DPE | 61 | 27 | 12 | 39000 | 1.34 | 0.160 | 5.3 | 22.5 | 40.5 | 42.2 |
| Example | 5-3 | MEPEG-E | 23 | HEMA-MPE | HEMA-DPE | 51 | 34 | 15 | 43000 | 1.46 | 0.130 | 4.7 | 21.5 | 36.5 | 43.0 |

Examples 6-1 to 6-2

(1) Production of phosphorylated products

2- Hydroxyethyl methacrylate, phosphoric anhydride ($P_2O_5$) and water were reacted at a predetermined ratio to give phosphorylated products (A) and (B) . The details are as follows:

(1-1) Production of phosphorylated product (A)

A reaction container was charged with 200 g of 2-hydroxyethyl methacrylate and 36.0 g of 85% phosphoric acid ($H_3PO_4$), and 89.1 g diphosphorus pentaoxide (phosphoric anhydride) ($P_2O_5$) was gradually added thereto under cooling such that the temperature did not exceed 60°C. Thereafter, the reaction temperature was set at 80°C, and the mixture was reacted for 6 hours and then cooled to give phosphorylated product (A).

(1-2) Production of phosphorylated product (B)

A reaction container was charged with 300 g of 2-hydroxyethyl methacrylate, and 113.9 g diphosphorus pentaoxide (phosphoric anhydride) ($P_2O_5$) was gradually added thereto under cooling such that the temperature did not exceed 60°C. Thereafter, the reaction temperature was set at 80°C, and the mixture was reacted for 6 hours and then cooled to give phosphorylated product (B).

(2) Production of phosphate polymers

(2-1) Example 6-1

A glass reaction container (four-necked flask) equipped with a stirrer was charged with 398.5 g water, then purged under stirring with nitrogen and heated to 80°C in a nitrogen atmosphere. A mixture of 410.4 g (effective component 60.8%, water 35%) of ω-methoxy polyethyleneglycol methacrylate (number of ethylene oxide units added, 23), 62.6 g phosphorylated product (A) and 4.14 g 3-mercaptopropionic acid, and a solution of 7.68 g ammonium persulfate in 43.5 g water, were added dropwise thereto over 1.5 hours respectively and then aged for 1.5 hours at the same temperature (80°C) . After aging was finished, the reaction mixture was neutralized with 59.35 g of 32% sodium hydroxide to give a phosphate polymer having a weight-average molecular weight of 36000 (Example 6-1) . During polymerization of the monomers, the pH was 1.2, and the degree of conversion was 100%.

(2-2) Example 6-2

A glass reaction container (four-necked flask) equipped with a stirrer was charged with 335.3 g water, then purged under stirring with nitrogen and heated to 80°C in a nitrogen atmosphere. A mixture of 75 g of ω-methoxy polyethyleneglycol methacrylate (number of ethylene oxide units added, 9), 14.1 g phosphorylated product (B) and 3.21 g 3-mercaptopropionic acid, and a solution of 4.59 g ammonium persulfate in 45 g water, were added dropwise thereto over 1.5 hours, respectively. After the mixture was aged for 1 hour, a solution of 2.30 g ammonium persulfate in 15 g water was added dropwise thereto over 30 minutes, and then aged for 2 hours at the same temperature (80°C). After aging was finished, the reaction mixture was neutralized with 19 g of 20% sodium hydroxide to give a phosphate polymer having a weight-average molecular weight of 16000 (Example 6-2). During polymerization of the monomers, the pH was 1.3, and the degree of conversion was 99%.

(3) Evaluation

The resulting phosphate polymers were evaluated for dispersibility and viscosity in the same manner as in Example 4-1 etc. The results are shown in Table 12.

Table 12

| Phophate copolymer | dispersibility (%) | Mortar viscosity (mPa·s) |
|---|---|---|
| Example 6-1 | 0.13 | 2794 |
| Example 6-2 | 0.25 | 3877 |

## Claims

1. A process for producing a phosphate polymer, which comprises copolymerization of a monomer 1 represented by the following formula (1), a monomer 2 represented by the following formula (2) and a monomer 3 represented by the following formula (3) at pH 7 or less and in the presence of a chain transfer agent,

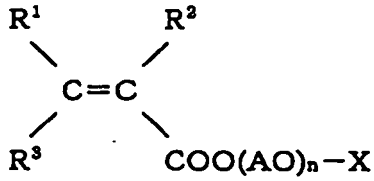
(1)

wherein $R^1$ and $R^2$ each represent a hydrogen atom or a methyl group, $R^3$ represents a hydrogen atom or -COO $(AO)_nX$ whereupon AO is a C2 to C4 oxyalkylene group or an oxystyrene group, n is a number of 3 to 200 which is the average number of total AO units added, and X represents a hydrogen atom or a C1 to C18 alkyl group,

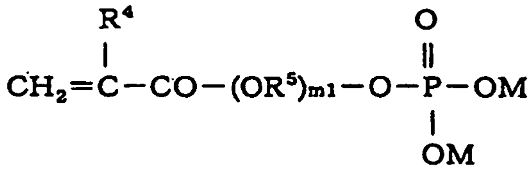
(2)

wherein $R^4$ represents a hydrogen atom or a methyl group, $R^5$ represents a C2 to C12 alkylene group, m1 is a number of 1 to 30, M represents a hydrogen atom, an alkali metal or an alkaline earth metal,

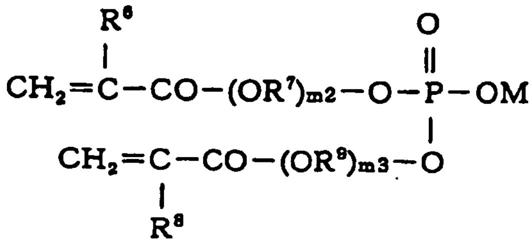
(3)

wherein $R^6$ and $R^8$ each represent a hydrogen atom or a methyl group, $R^7$ and $R^9$ each represent a C2 to C12 alkylene group, m2 and m3 each represent a number of 1 to 30, and M represents a hydrogen atom, an alkali metal or an alkaline earth metal.

2. The process for producing a phosphate polymer according to claim 1, wherein the chain transfer agent is used in an amount of 4 mol% or more based on the number of moles of the monomers 1 to 3 in total.

3. The process for producing a phosphate polymer according to claim 1 or 2, wherein the monomers 1 to 3 are copolymerized in the presence of a polymerization initiator in an amount of 5 mol% or more based on the number of moles of the monomers 1 to 3 in total.

4. The process according to any one of claims 1 to 3,
wherein the degree of conversion of the monomers 2 and 3 is 95 % or more, as calculated according to the following equation:

$$\text{Degree of conversion (\%)} = [1-Q/P] \times 100$$

wherein Q is the ratio of the monomers 2 and 3 to X derived from the monomer 1 in the reaction system after reaction

is finished and P is the ratio of the monomers 2 and 3 to X derived from the monomer 1 in the reaction system when the reaction is initiated, wherein the ratio (mol%) of the monomers 2 and 3 in the phosphorus-containing compounds in the reaction system when the reaction is initiated or after the reaction is finished is determined on the basis of measurement results of $^1$H-NMR.

**5.** The process according to claim 1, wherein the monomers 2 and 3 are obtained by reacting an organic hydroxy compound represented by the general formula (4), phosphoric anhydride ($P_2O_5$) and water:

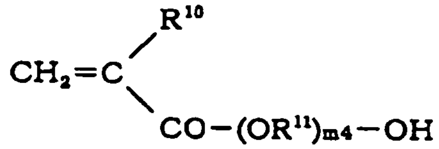

(4)

wherein $R^{10}$ represents a hydrogen atom or a methyl group, and $R^{11}$ represents a C2 to C12 alkylene group, and m4 is a number of 1 to 30.

**6.** The process according to claim 1, wherein the chain transfer agent is a thiol-based chain transfer agent.

**7.** The process as defined in claim 1 wherein the phosphate polymer has a weight-average molecular weight of 10,000 to 150,000 determined by gel permeation chromatography and a weight-average molecular weight (Mw)/number-average molecular weight (Mn) ratio (Mw/Mn) of 1.0 to 2.6.

**8.** A hydraulic composition, which comprises a hydraulic powder, water, and the phosphate polymer obtained by the process according to any one of the claims 1 to 7.

**9.** Use of the phosphate polymer obtained by the process as defined in any one of the claims 1 to 7, as a dispersant for a hydraulic composition.

**Patentansprüche**

**1.** Verfahren zur Erzeugung eines Phosphatpolymers, umfassend die Copolymerisation eines Monomers 1, dargestellt durch die folgende Formel (1), eines Monomers 2, dargestellt durch die folgende Formel (2), und eines Monomers 3, dargestellt durch die folgende Formel (3), bei pH 7 oder weniger und in der Gegenwart eines Kettenübertragungs-mittels,

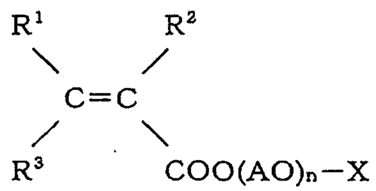

(1)

worin $R^1$ und $R^2$ jeweils unabhängig ein Wasserstoffatom oder eine Methylgruppe sind, $R^3$ ein Wasserstoffatom oder $-COO(AO)_nX$ ist, wobei AO eine C2-bis C4-Oxyalkylengruppe oder Oxystyrolgruppe ist, n eine Zahl von 3 bis 200 ist, die die durchschnittliche Zahl der gesamten zugegebenen AO-Einheiten ist, und X ein Wasserstoffatom oder eine C1- bis C18-Alkylgruppe ist,

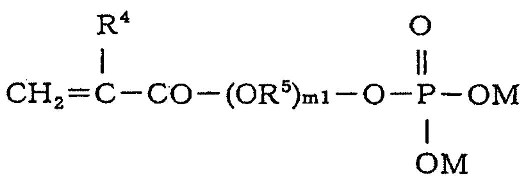

(2)

worin $R^4$ ein Wasserstoffatom oder eine Methylgruppe ist, $R^5$ eine C2- bis C12-Alkylengruppe ist, m1 eine Zahl von 1 bis 30 ist, M ein Wasserstoffatom, ein Alkalimetall oder Erdalkalimetall ist,

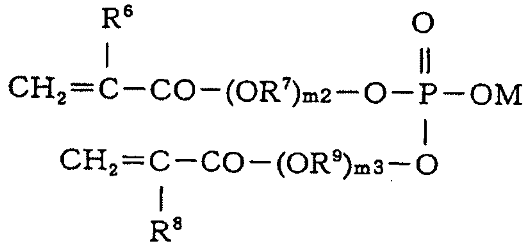 (3)

worin $R^6$ und $R^8$ jeweils ein Wasserstoffatom oder eine Methylgruppe sind, $R^7$ und $R^9$ jeweils eine C2- bis C12-Alkylengruppe sind, m2 und m3 jeweils eine Zahl von 1 bis 30 sind und M ein Wasserstoffatom, Alkalimetall oder Erdalkalimetall ist.

2. Verfahren zur Erzeugung eines Phosphatpolymers nach Anspruch 1, worin das Kettenübertragungsmittel in einer Menge von 4 Mol-% oder mehr, bezogen auf die Zahl der Mole der Monomere 1 bis 3 insgesamt, verwendet wird.

3. Verfahren zur Erzeugung eines Phosphatpolymers nach Anspruch 1 oder 2, worin die Monomere 1 bis 3 in der Gegenwart eines Polymerisationsinitiators in einer Menge von 5 Mol-% oder mehr, bezogen auf die Molzahlen der Monomere 1 bis 3 insgesamt, copolymerisiert werden.

4. Verfahren nach einem der Ansprüche 1 bis 3, worin der Umwandlungsgrad der Monomere 2 und 3 95% oder mehr ist, berechnet gemäß der folgenden Gleichung:

$$\text{Umwandlungsgrad (\%)} = [1-Q/P] \times 100$$

worin Q das Verhältnis der Monomere 2 und 3 zu X ist, das vom Monomer 1 im Reaktionssystem stammt, nachdem die Reaktion beendigt ist, und P das Verhältnis der Monomere 2 und 3 zu X ist, das von dem Monomer 1 in dem Reaktionssystem stammt, wenn die Reaktion initiiert ist, worin das Verhältnis (Mol-%) der Monomere 2 und 3 in den Phosphor-haltigen Verbindungen im Reaktionssystem, wenn die Reaktion initiiert ist oder nachdem die Reaktion beendet ist, auf der Basis der Messergebnisse von $^1$H-NMR bestimmt wird.

5. Verfahren nach Anspruch 1, worin die Monomere 2 und 3 erhalten werden durch Reaktion einer organischen Hydroxyverbindung, dargestellt durch die allgemeine Formel (4), Phosphorsäureanhydrid ($P_2O_5$) und Wasser:

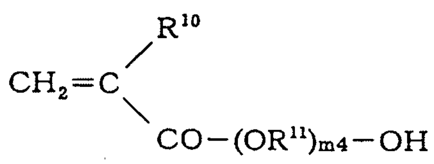 (4)

worin $R^{10}$ ein Wasserstoffatom oder eine Methylgruppe ist und $R^{11}$ eine C2- bis C12-Alkylengruppe ist und m4 eine Zahl von 1 bis 30 ist.

6. Verfahren nach Anspruch 1, worin das Kettenübertragungsmittel ein Kettenübertragungsmittel auf Thiolbasis ist.

7. Verfahren nach Anspruch 1, worin das Phosphatpolymer ein Molekulargewicht im Gewichtsmittel von 10.000 bis 150.000 hat, bestimmt durch Gelpermeationschromatographie, und ein Verhältnis des Molekulargewichtes im Gewichtsmittel (Mw)/ Molekulargewicht im Zahlenmittel (Mn), (Mw/Mn), von 1,0 bis 2,6 hat.

8. Hydraulische Zusammensetzung, umfassend ein hydraulisches Pulver, Wasser und das Phosphatpolymer, erhalten durch das Verfahren nach einem der Ansprüche 1 bis 7.

**9.** Verwendung des Phosphatpolymers, erhalten durch das Verfahren wie in einem der Ansprüche 1 bis 7 definiert, als Dispergiermittel für eine hydraulische Zusammensetzung.

## Revendications

**1.** Procédé pour produire un polymère à base de phosphate, qui comprend la copolymérisation d'un monomère 1 représenté par la formule (1) suivante, d'un monomère 2 représenté par la formule (2) suivante et d'un monomère 3 représenté par la formule (3) suivante à pH 7 ou moins et en présence d'un agent de transfert de chaîne,

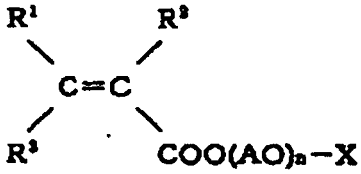

(1)

où $R^1$ et $R^2$ représentent chacun un atome d'hydrogène ou un groupe méthyle, $R^3$ représente un atome d'hydrogène ou $-COO(AO)_nX$ où AO est un groupe C2 à C4 oxyalkylène ou un groupe oxystyrène, n est un nombre de 3 à 200 qui est le nombre moyen d'unités AO totales ajoutées, et X représente un atome d'hydrogène ou un groupe C1 à C18 alkyle,

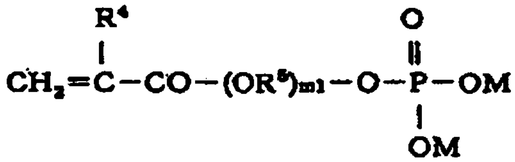

(2)

où $R^4$ représente un atome d'hydrogène ou un groupe méthyle, $R^5$ représente un groupe C2 à C12 alkylène, m1 est un nombre de 1 à 30, M représente un atome d'hydrogène, un métal alcalin ou un métal alcalino-terreux,

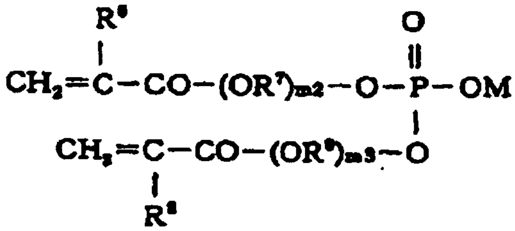

(3)

où $R^6$ et $R^8$ représentent chacun un atome d'hydrogène ou un groupe méthyle, $R^7$ et $R^9$ représentent chacun un groupe C2 à Cl2 alkylène, m2 et m3 représentent chacun un nombre de 1 à 30, et M représente un atome d'hydrogène, un métal alcalin ou an un métal alcalino-terreux.

**2.** Procédé pour produire un polymère à base de phosphate selon la revendication 1, où l'agent de transfert de chaîne est utilisé en une quantité de 4 mol% ou plus sur la base du nombre de moles des monomères 1 à 3 au total.

**3.** Procédé pour produire un polymère à base de phosphate selon la revendication 1 ou 2, où les monomères 1 à 3 sont copolymérisés en présence d'un initiateur de polymérisation en une quantité de 5 mol% ou plus sur la base du nombre de moles des monomères 1 à 3 au total.

**4.** Procédé selon l'une quelconque des revendications 1 à 3, où le degré de conversion des monomères 2 et 3 est 95 % ou plus, calculé selon l'équation suivante:

$$\text{Degré de conversion (\%)} = [1\text{-}Q/P] \times 100$$

où Q est le rapport des monomères 2 et 3 à X dérivé du monomère 1 dans le système réactionnel après la fin de la réaction et P est le rapport des monomères 2 et 3 à X dérivé du monomère 1 dans le système réactionnel quand la réaction est initiée, où le rapport (mol %) des monomères 2 et 3 dans les composés contenant du phosphore dans le système réactionnel quand la réaction est initiée ou après la fin de la réaction est déterminé sur la base de résultats de mesure de $^1$H-RMN.

5. Procédé selon la revendication 1, où les monomères 2 et 3 sont obtenus par réaction d'un composé hydroxylé organique représenté par la formule générale (4), d'anhydride phosphorique ($P_2O_5$) et d'eau:

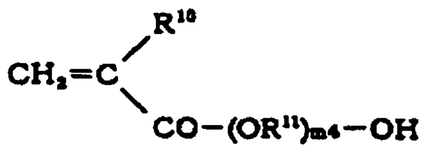

(4)

où $R^{10}$ représente un atome d'hydrogène ou un groupe méthyle, et $R^{11}$ représente un groupe C2 à C12 alkylène, et m4 est un nombre de 1 à 30.

6. Procédé selon la revendication 1, où l'agent de transfert de chaîne est un agent de transfert de chaîne à base de thiol.

7. Procédé tel que défini dans la revendication 1 où le polymère à base de phosphate a une masse moléculaire moyenne en poids de 10000 à 150000 déterminée par chromatographie par perméation de gel et un rapport masse moléculaire moyenne en poids (Mp)/masse moléculaire moyenne en nombre (Mn) (Mp/Mn) de 1,0 à 2,6.

8. Composition hydraulique, qui comprend une poudre hydraulique, de l'eau et le polymère à base de phosphate obtenu par le procédé selon l'une quelconque des revendications 1 à 7.

9. Utilisation du polymère à base de phosphate obtenu par le procédé tel que défini dans l'une quelconque des revendications 1 à 7 comme dispersant pour une composition hydraulique.

Fig. 1

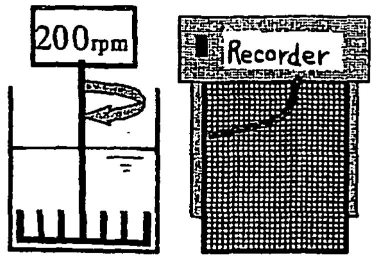
200rpm
Recorder

Fig. 2

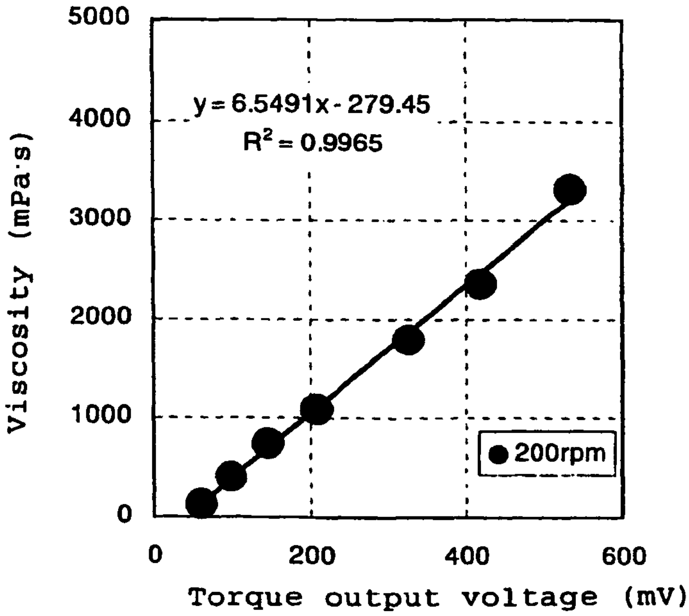
y = 6.5491x - 279.45
$R^2$ = 0.9965
200rpm
Viscosity (mPa·s)
Torque output voltage (mV)
0
1000
2000
3000
4000
5000
0
200
400
600

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 11079811 A
- JP 2000327386 A
- EP 1300426 A1
- WO 0174909 A2


### Non-patent literature cited in the description


- **GIJUTSUSHOIN.** Koncrete Soran. *Comprehensive Bibliography on Concrete,* 10 June 1998